# EUROPEAN PATENT APPLICATION

(11) **EP 4 716 300 A1**
(43) Date of publication of application: **25.03.2026**
(21) Application number: 24814361.2
(22) Date of filing: 24.05.2024
(51) Int. Cl.: H04W 36/00

(54) **COMMUNICATION METHOD AND APPARATUS**

(30) Priority: 02.06.2023 CN 202310652455
(71) Applicant: Huawei Technologies Co., Ltd., Shenzhen, Guangdong 518129 (CN)
(72) Inventor: HU, Xingxing, Shenzhen, Guangdong 518129 (CN); ZHANG, Xiaoyu, Shenzhen, Guangdong 518129 (CN); LI, Yanbing, Shenzhen, Guangdong 518129 (CN); LIAO, Shuri, Shenzhen, Guangdong 518129 (CN); SHI, Meng, Shenzhen, Guangdong 518129 (CN)
(74) Representative: Gill Jennings & Every LLP
(86) International application number: PCT/CN2024/095346
(87) International publication number: WO 2024/245164

(57) **Abstract**

This application relates to a communication method and apparatus. A terminal device receives first information from a first network device, to learn to disconnect, when the terminal device is handed over from a first cell managed by the first network device to a second cell managed by a second network device, a connection between the terminal device and the first cell after a receiving moment of a reference signal of the second cell is reached or after the reference signal of the second cell is received. The terminal device does not disconnect the connection between the terminal device and the first cell when learning that the terminal device is handed over from the first cell to the second cell, but disconnects the connection between the terminal device and the first cell after the receiving moment of the reference signal of the second cell is reached or after the reference signal of the second cell is received. The foregoing solution can shorten handover interruption time.

## Description

This application claims priority to Chinese Patent Application No. 202310652455.0, filed with the China National Intellectual Property Administration on June 2, 2023, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a mobile communication network, in a process in which a terminal device is handed over from a source base station to a target base station, data transmission is interrupted. Handover interruption time (mobility interruption time) is duration in which the terminal device cannot perform data transmission with either the source base station or the target base station. Currently, the handover interruption time may be related to a periodicity of a synchronization signal block-based measurement timing configuration (SSB-based measurement timing configuration, SMTC) window, time for random access between the terminal device and the target base station, and the like. A longer periodicity of the SMTC window and/or longer time for random access between the terminal device and the target base station indicate/indicates longer handover interruption time. How to shorten the handover interruption time becomes a technical problem that needs to be urgently resolved in a current phase.

### SUMMARY

This application provides a communication method and apparatus, to shorten handover interruption time.

According to a first aspect, a communication method is provided. The method includes: receiving first information from a first network device, where the first information indicates a terminal device to disconnect, when the terminal device is handed over from a first cell managed by the first network device to a second cell managed by a second network device, a connection between the terminal device and the first cell after a receiving moment of a reference signal of the second cell is reached or after the reference signal of the second cell is received; and disconnecting the connection between the terminal device and the first cell after the receiving moment of the reference signal of the second cell is reached or after the reference signal of the second cell is received.

In the foregoing embodiment, the terminal device may receive the first information from the first network device, to learn to disconnect, when the terminal device is handed over from the first cell managed by the first network device to the second cell managed by the second network device, the connection between the terminal device and the first cell after the receiving moment of the reference signal of the second cell is reached or after the reference signal of the second cell is received. This indicates that the terminal device does not disconnect the connection between the terminal device and the first cell when learning that the terminal device is handed over from the first cell to the second cell, but disconnects the connection between the terminal device and the first cell after the receiving moment of the reference signal of the second cell is reached or after the reference signal of the second cell is received. A moment at which the terminal device learns that the terminal device is handed over from the first cell to the second cell is earlier than the receiving moment of the reference signal of the second cell, and is also earlier than a moment at which the reference signal of the second cell is received. In other words, time for the terminal device to maintain the connection to the first cell is prolonged, and therefore handover interruption time can be shortened.

In a possible implementation, the method further includes: receiving conditional handover (conditional handover, CHO) configuration information from the first network device, where the CHO configuration information includes CHO trigger condition information corresponding to one or more candidate cells, where the second cell is a candidate cell, in the one or more candidate cells, that meets the CHO trigger condition information; the second cell is a candidate cell, in the one or more candidate cells, that meets the CHO trigger condition information and of which a receiving moment of a reference signal is reached; or the second cell is a candidate cell, in the one or more candidate cells, that meets the CHO trigger condition information and whose reference signal is received.

In the foregoing embodiment, the second cell is the candidate cell, in one or more candidate cells, that meets the CHO trigger condition information and of which the receiving moment of the reference signal is reached. This indicates that the terminal device determines the second cell, and the receiving moment of the reference signal of the second cell is also reached, so that a process of waiting for the receiving moment of the reference signal of the second cell to be reached is reduced, and therefore a handover delay is reduced. Alternatively, the second cell is the candidate cell, in the one or more candidate cells, that meets the CHO trigger condition information and whose reference signal is received. This indicates that the terminal device determines the second cell, and the reference signal of the second cell is also received, so that a handover delay is reduced.

In a possible implementation, the method further includes: receiving first configuration information from the first network device, where the first configuration information is used to determine a random access resource for accessing the second cell, and the random access resource of the second cell includes a random access moment; and disconnecting the connection between the terminal device and the first cell includes: disconnecting the connection between the terminal device and the first cell at the random access moment.

In the foregoing implementation, the receiving moment of the reference signal of the second cell or the moment at which the reference signal of the second cell is received is earlier than the random access moment, and the terminal device disconnects the connection between the terminal device and the first cell at the random access moment. In other words, the time for the terminal device to maintain the connection to the first cell is prolonged, and therefore the handover interruption time can be shortened.

In a possible implementation, the method further includes: receiving second configuration information from the first network device, where the second configuration information is used to determine a physical uplink shared channel (physical uplink shared channel, PUSCH) resource for accessing the second cell, and the PUSCH resource includes a sending moment of a PUSCH; and disconnecting the connection between the terminal device and the first cell includes: disconnecting the connection between the terminal device and the first cell at the sending moment of the PUSCH.

In the foregoing implementation, the receiving moment of the reference signal of the second cell or the moment at which the reference signal of the second cell is received is earlier than the sending moment of the PUSCH, and the terminal device disconnects the connection between the terminal device and the first cell at the sending moment of the PUSCH. In other words, the time for the terminal device to maintain the connection to the first cell is prolonged, and therefore the handover interruption time can be shortened.

In a possible implementation, before disconnecting the connection between the terminal device and the first cell, the method further includes: sending second information to the first network device, where the second information indicates that the terminal device is to disconnect the connection between the terminal device and the first cell.

In the foregoing implementation, the terminal device may send the second information to the first network device, so that the first network device learns that the connection between the terminal device and the first cell is disconnected. This avoids a problem that a scheduling indicator (for example, a modulation and coding scheme (modulation and coding scheme, MCS)) is reduced because the first network device continuously schedules the terminal device when the first network device does not know that the connection between the terminal device and the first cell has been disconnected.

In a possible implementation, after the second cell is accessed, disconnecting the connection between the terminal device and the first cell includes: disconnecting the connection between the terminal device and the first cell after a next receiving moment of the reference signal of the second cell is reached; or disconnecting the connection between the terminal device and the first cell after the reference signal of the second cell is received next time.

In the foregoing implementation, a moment at which the second cell is accessed is earlier than the next receiving moment of the reference signal of the second cell, and the terminal device disconnects the connection between the terminal device and the first cell after the next receiving moment of the reference signal of the second cell is reached. In other words, the time for the terminal device to maintain the connection to the first cell is prolonged, and therefore the handover interruption time can be shortened. Alternatively, a moment at which the second cell is accessed is earlier than a moment at which the reference signal of the second cell is received next time, and the terminal device disconnects the connection between the terminal device and the first cell after the moment at which the reference signal of the second cell is received next time. In other words, the time for the terminal device to maintain the connection to the first cell is prolonged, and therefore the handover interruption time can be shortened.

In a possible implementation, the method further includes: determining the receiving moment of the reference signal of the second cell based on synchronization signal block-based measurement timing configuration information of the second cell; or receiving third information from the first network device, where the third information indicates the receiving moment of the reference signal of the second cell.

In the foregoing implementation, the terminal device can determine the receiving moment of the reference signal of the second cell, so that after the receiving moment of the reference signal of the second cell is reached, the terminal device can disconnect the connection between the terminal device and the first cell, or the terminal device can learn of the receiving moment of the reference signal.

In a possible implementation, the reference signal of the second cell is a synchronization signal block (synchronization signal block, SSB); or the reference signal of the second cell is a reference signal obtained by performing scrambling based on an identifier allocated by the second network device to the terminal device, for example, a channel state information reference signal (channel state information reference signal, CSI-RS), a cell specific reference signal (cell specific reference signal, CS-RS), a UE specific reference signal (user equipment specific reference signal, US-RS), or a demodulation reference signal (demodulation reference signal, DMRS).

In a possible implementation, the reference signal of the second cell is used by the terminal device to perform downlink synchronization with the second cell.

According to a second aspect, a communication method is provided. The method includes: sending first information to a terminal device, where the first information indicates the terminal device to disconnect, when the terminal device is handed over from a first cell managed by a first network device to a second cell managed by a second network device, a connection between the terminal device and the first cell after a receiving moment of a reference signal of the second cell is reached or after the reference signal of the second cell is received; and disconnecting the connection between the terminal device and the first cell.

In a possible implementation, the method further includes: sending conditional handover CHO configuration information to the terminal device, where the CHO configuration information includes CHO trigger condition information corresponding to one or more candidate cells, where the second cell is a candidate cell, in the one or more candidate cells, that meets the CHO trigger condition information; the second cell is a candidate cell, in the one or more candidate cells, that meets the CHO trigger condition information and of which a receiving moment of a reference signal is reached; or the second cell is a candidate cell, in the one or more candidate cells, that meets the CHO trigger condition information and whose reference signal is received.

In a possible implementation, the method further includes: sending first configuration information to the terminal device, where the first configuration information is used to determine a random access resource for accessing the second cell, and the random access resource of the second cell includes a random access moment.

In a possible implementation, the method further includes: sending second configuration information to the terminal device, where the second configuration information is used to determine a PUSCH resource for accessing the second cell, and the PUSCH resource includes a sending moment of a PUSCH.

In a possible implementation, disconnecting the connection between the terminal device and the first cell includes: disconnecting the connection between the terminal device and the first cell at a first moment, where the first moment is determined based on a moment at which second information from the terminal device is received, and the second information indicates that the terminal device is to disconnect the connection between the terminal device and the first cell; the first moment is determined based on a next receiving moment of the reference signal of the second cell after fourth information from the second network device is received, and the fourth information indicates that the terminal device has been handed over to the second cell; the first moment is determined, after fourth information from the second network device is received, based on a moment at which the terminal device receives the reference signal of the second cell next time; or the first moment is indicated by the second network device.

In the foregoing implementation, the first network device may disconnect the connection between the terminal device and the first cell at the first moment. In other words, the first network device may learn that the connection between the terminal device and the first cell is disconnected. This avoids a problem that a scheduling indicator (for example, an MCS) is reduced because the first network device continuously schedules the terminal device when the first network device does not know that the connection between the terminal device and the first cell has been disconnected.

In a possible implementation, the first information is carried in a handover command, and disconnecting the connection between the terminal device and the first cell includes: disconnecting the connection between the terminal device and the first cell after the receiving moment of the reference signal of the second cell is reached.

In the foregoing implementation, when legacy handover is used, the first network device may disconnect the connection between the terminal device and the first cell after the receiving moment of the reference signal of the second cell is reached. In other words, the first network device may learn that the connection between the terminal device and the first cell is disconnected. This avoids a problem that a scheduling indicator (for example, an MCS) is reduced because the first network device continuously schedules the terminal device when the first network device does not know that the connection between the terminal device and the first cell has been disconnected.

In a possible implementation, the reference signal of the second cell is an SSB.

According to a third aspect, a communication method is provided. The method includes: receiving indication information from a first network device, where the indication information indicates a terminal device to perform synchronization based on a reference signal of a neighboring cell of the terminal device; receiving first information from the first network device, where the first information indicates the terminal device to be handed over from a first cell managed by the first network device to a second cell managed by a second network device, and the second cell is a cell in the neighboring cell of the terminal device; and accessing the second cell.

In the foregoing embodiment, the terminal device may receive the indication information from the first network device, to learn that the terminal device performs synchronization based on the reference signal of the neighboring cell of the terminal device. The neighboring cell of the terminal device includes the second cell. This indicates that the terminal device can directly access the second cell when learning that the terminal device is handed over from the first cell to the second cell. In other words, when CHO handover is used, the terminal device has completed synchronization with the second cell before determining the second cell. Alternatively, when legacy handover is used, a moment at which the terminal device performs synchronization is earlier than a moment at which the terminal device learns that the terminal device is handed over from the first cell to the second cell. Therefore, through advanced synchronization, time consumed for performing synchronization after the second cell is determined or after the terminal device learns that the terminal device is handed over from the first cell to the second cell can be reduced, and therefore handover interruption time can be shortened.

In a possible implementation, the method further includes: sending, to the first network device, a measurement result of neighboring cell measurement performed on the neighboring cell of the terminal device, where the indication information further indicates one or more neighboring cells that perform synchronization with the terminal device, and the one or more neighboring cells are determined based on the measurement result. This indicates that the first network device may clearly notify the terminal device of neighboring cells that need to perform synchronization.

According to a fourth aspect, a communication method is provided. The method includes: sending indication information to a terminal device, where the indication information indicates the terminal device to perform synchronization based on a reference signal of a neighboring cell of the terminal device; and sending first information to the terminal device, where the first information indicates the terminal device to be handed over from a first cell managed by a first network device to a second cell managed by a second network device, and the second cell is a cell in the neighboring cell of the terminal device.

In a possible implementation, the method further includes: receiving, from the terminal device, a measurement result of neighboring cell measurement performed on the neighboring cell of the terminal device; and determining, based on the measurement result, one or more neighboring cells that perform synchronization with the terminal device, where the indication information further indicates the one or more neighboring cells.

According to a fifth aspect, a communication apparatus is provided. The communication apparatus includes a unit or module configured to implement the method according to any one of the implementations of any one of the first aspect to the fourth aspect.

According to a sixth aspect, a communication apparatus is provided. The communication apparatus includes at least one processor and a memory. The memory is configured to store a computer program or instructions. The at least one processor is configured to execute the computer program or the instructions in the memory, so that the method according to any one of the implementations of any one of the first aspect to the fourth aspect is performed.

According to a seventh aspect, a communication system is provided. The communication system includes a terminal device and a first network device. The terminal device is configured to perform the method according to any one of the implementations of the first aspect. The first network device is configured to perform the method according to any one of the implementations of the second aspect.

According to an eighth aspect, a communication system is provided. The communication system includes a terminal device and a first network device. The terminal device is configured to perform the method according to any one of the implementations of the third aspect. The first network device is configured to perform the method according to any one of the implementations of the fourth aspect.

According to a ninth aspect, a computer-readable storage medium is provided. The computer-readable storage medium stores computer instructions. When the computer instructions are executed, a computer is enabled to perform the method according to any one of the implementations of any one of the first aspect to the fourth aspect.

According to a tenth aspect, a computer program product is provided. The computer program product includes computer program code. When the computer program code is run on a computer, the computer is enabled to perform the method according to any one of the implementations of any one of the first aspect to the fourth aspect.

According to an eleventh aspect, a chip is provided. The chip includes at least one processor and an interface. The processor is configured to read and execute instructions stored in a memory. When the instructions are run, the chip is enabled to perform the method according to any one of the implementations of any one of the first aspect to the fourth aspect.

### BRIEF DESCRIPTION OF DRAWINGS

The following briefly describes accompanying drawings used in describing embodiments.
FIG. 1 shows a basic architecture of a communication system according to an embodiment of this application;
FIG. 2 is a diagram of NTN-device-based RAN architectures to which an embodiment of this application is applicable;
FIG. 3 is a schematic flowchart of CHO handover;
FIG. 4 is a schematic flowchart of legacy handover;
FIG. 5 is a schematic flowchart of a communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

The following describes technical solutions in embodiments of this application with reference to accompanying drawings in embodiments of this application. Terms "system" and "network" may be used interchangeably in embodiments of this application. "/" represents an "or" relationship between associated objects unless otherwise specified. For example, A/B may represent A or B. "And/or" in this application is merely an association relationship for describing associated objects, and represents that three relationships may exist. For example, A and/or B may represent the following three cases: Only A exists, both A and B exist, and only B exists, where A and B may be singular or plural. In addition, in descriptions of this application, unless otherwise specified, "a plurality of' means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same network elements and purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. Terms "include", "contain", "have", and other variants thereof all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In various embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

It should be understood that the technical solutions of this application may be applied to a non-terrestrial network (non-terrestrial network, NTN) or a scenario in which an NTN and a terrestrial network (terrestrial network, TN) are integrated. The technical solutions of this application may use a long term evolution (long term evolution, LTE) access technology, a 5th generation mobile communication (5th generation mobile communication, 5G) access technology, or an access technology evolved after 5G, for example, a 6th generation mobile communication (6th generation mobile communication, 6G) access technology.

The following describes a basic architecture of a communication system provided in embodiments of this application. The communication system provided in this application may include one or more network devices and one or more terminal devices.

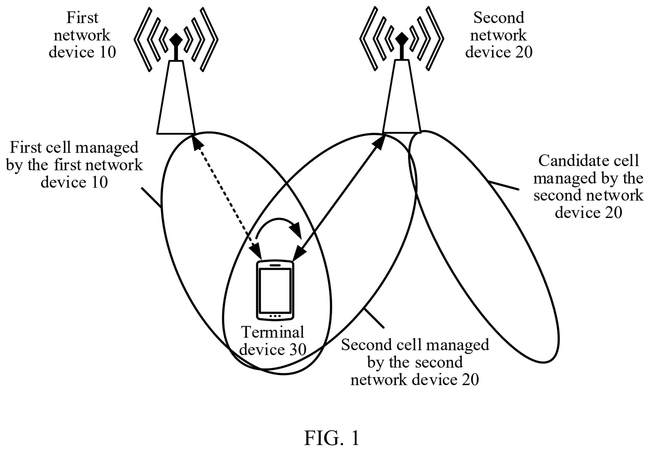

The following uses a system architecture shown in FIG. 1 as an example for description. As shown in FIG. 1, the communication system includes a first network device 10, a second network device 20, and a terminal device 30. The terminal device 30 may communicate with the first network device 10 through a first cell managed by the first network device 10. Usually, due to movement of the terminal device, a service change, a network coverage status change, or another cause, the first cell may not be able to continue to provide a service for the terminal device 30, or quality of service provided by the first cell for the terminal device 30 is poor. To avoid service interruption, the terminal device 30 may be handed over to a more appropriate cell, to continue to provide the service for the terminal device 30. For example, the terminal device 30 may be handed over from the first cell to a second cell managed by the second network device 20. In other words, the terminal device 30 may communicate with the second network device 20 through the second cell managed by the second network device 20.

Herein, the first network device 10 may be referred to as a source network device, and the second network device 20 may be referred to as a target network device. The source network device is a network device accessed by the terminal device before handover or a network device that provides a service for the terminal device before handover. The target network device is a network device to which the terminal device needs to be handed over, a network device accessed by the terminal device after successful handover, or a network device that provides a service for the terminal device after successful handover. Similarly, the first cell may be referred to as a source cell, and the second cell may be referred to as a target cell. The source cell is a cell accessed by the terminal device before handover; the source cell is a cell managed by the source network device, a cell covered by the source network device, or a cell under jurisdiction of the source network device; or the source cell belongs to the source network device. The target cell is a cell accessed by the terminal device after handover; the target cell is a cell managed by the target network device, a cell covered by the target network device, or a cell under jurisdiction of the target network device; or the target cell belongs to the target network device.

Optionally, the first network device and the second network device are a same network device or different network devices, and the first cell and the second cell are a same cell or different cells.

It should be noted that quantities of network devices and terminal devices in FIG. 1 are merely examples, and should not be considered as a specific limitation on this application. The following describes in detail the terminal device and the network device that are related to the system architecture.

### 1. Terminal device

The terminal device is an entity that is on a user side and that is configured to receive a signal, send a signal, or receive a signal and send a signal. The terminal device is configured to provide one or more of a voice service and a data connectivity service for a user. The terminal device may be a device that has a wireless transceiver function and that may cooperate with a network device to provide a communication service for the user. Specifically, the terminal device may be user equipment (user equipment, UE), an access terminal, a subscriber unit, a subscriber station, a mobile station, a remote station, a remote terminal, a mobile device, a terminal, a wireless communication device, a user agent, a user apparatus, or a roadside unit (roadside unit, RSU). The terminal device may alternatively be an uncrewed aerial vehicle, an internet of things (internet of things, IoT) device, a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, a wearable device (also referred to as a wearable smart device), a virtual reality (virtual reality, VR) terminal, an augmented reality (augmented reality, AR) terminal, a wireless terminal in telemedicine (remote medical), a wireless terminal in industrial control (industrial control), a wireless terminal in self driving (self driving), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a terminal in a 5G system, or a terminal in a next generation communication system. This is not limited in embodiments of this application. Optionally, the terminal device may be referred to as an anchor device.

A device form of the terminal device is not limited in embodiments of this application. An apparatus for implementing a function of the terminal device may be a terminal device, or may be an apparatus, for example, a chip system, that can support the terminal device in implementing the function. The apparatus may be mounted in the terminal device or used together with the terminal device. In embodiments of this application, the chip system may include a chip, or may include a chip and another discrete component.

### 2. Network device

The network device is an entity that is on a network side and that is configured to send a signal, receive a signal, or send a signal and receive a signal. The network device may be an apparatus deployed in a radio access network (radio access network, RAN) to provide a wireless communication function for a terminal device.

In a possible scenario, the network device may be a device having a function of a base station, for example, an evolved NodeB (evolved NodeB, eNodeB), a transmission reception point (transmission reception point, TRP), a transmission point (transmission point, TP), a next generation NodeB (next generation NodeB, gNB), a next generation base station in a 6G mobile communication system, an integrated access and backhaul (integrated access and backhaul, IAB) node, or a non-terrestrial network device in an NTN, that is, a device or a satellite that may be deployed on a high-altitude platform. The network device may be a transmission reception point (transmission reception point, TRP), a base station, or a control node in various forms, for example, a network controller or a wireless controller. Specifically, the network device may be a macro base station in various forms, a micro base station (also referred to as a small cell) in a heterogeneous network (heterogeneous network, HetNet) scenario, a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU) and a remote radio unit (remote radio unit, RRU) in a distributed base station scenario, a transmission reception point (transmission reception point, TRP), a transmission point (transmission point, TP), a mobile switching center, or the like; or may be an antenna panel of a base station. The control node may be connected to a plurality of base stations, and configure resources for a plurality of terminals covered by the plurality of base stations. In systems using different radio access technologies, names of devices having a function of a base station may vary. For example, the device may be a gNB in 5G, a network side device in a network after 5G, a network device in a future evolved public land mobile (communication) network (public land mobile network, PLMN), or a device that has a function of a base station in device-to-device (device-to-device, D2D) communication, machine-to-machine (machine-to-machine, M2M) communication, or internet of vehicles communication. A specific name of the network device is not limited in this application. The network device may alternatively be a baseband unit pool (BBU pool), an RRU, or the like in an open access network (open RAN, O-RAN or ORAN) or a cloud radio access network (cloud radio access network, CRAN).

All or some functions of the network device in this application may alternatively be implemented by using a software function running on hardware, or may be implemented by using a virtualized function instantiated on a platform (for example, a cloud platform). The network device in this application may alternatively be a logical node, a logical module, or software that can implement all or some functions of the network device.

In another possible scenario, a plurality of network devices collaborate to assist a terminal device in implementing wireless access, and different network devices separately implement a part of functions of a base station. For example, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network device is not limited in embodiments of this application. An apparatus for implementing a function of the network device may be a network device, or may be an apparatus, for example, a chip system, that can support the network device in implementing the function. The apparatus may be mounted in the network device or used together with the network device.

To facilitate understanding of content of the solutions, the following further explains and describes some terms in embodiments of this application, to facilitate understanding by a person skilled in the art. This part is merely for ease of understanding, and cannot be considered as a specific limitation on this application.

### 1. NTN

The NTN provides communication coverage for a terminal device by deploying a base station or a part of functions of the base station on a non-terrestrial network device (for example, a ship, a high-altitude platform, an uncrewed aerial vehicle, or a satellite), to improve reliability of a communication system. It should be noted that, for ease of understanding, only an example in which the non-terrestrial network device in the NTN is a satellite is used below for description, and this should not be considered as a specific limitation on this application.

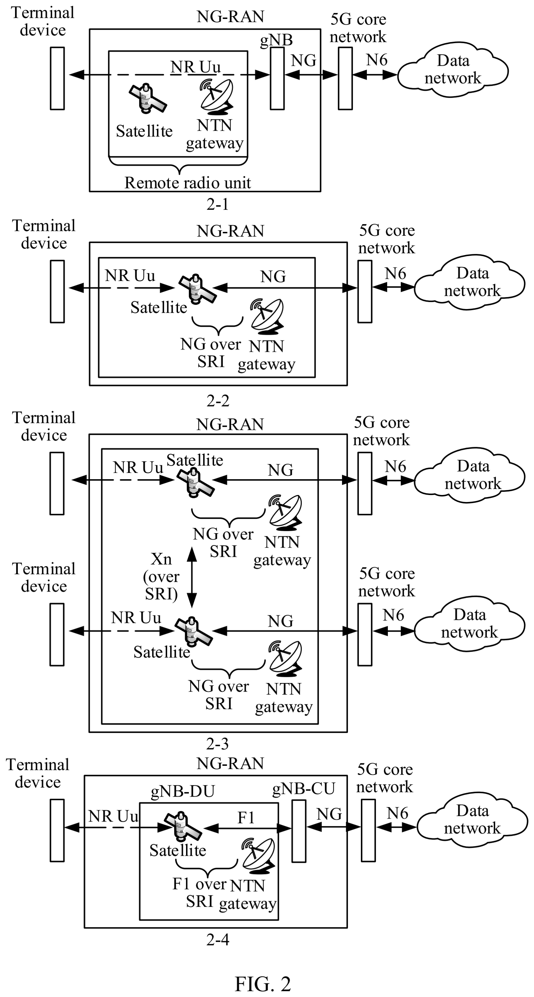

When the non-terrestrial network device is a satellite, for different RAN architectures of the NTN, the satellite may also have different functions. For example, in an architecture of a transparent satellite (transparent satellite) shown in 2-1 in FIG. 2, functions of the satellite are to perform wireless frequency filtering, frequency conversion, and amplification. In other words, in the transparent satellite architecture, the satellite mainly serves as a layer 1 (L1 for short) relay device, and is configured to regenerate a physical layer signal (that is, perform wireless frequency filtering, frequency conversion, and amplification), and does not have another higher protocol layer. In an architecture of a regenerative satellite without an inter-satellite link (regenerative satellite without inter-satellite link) shown in 2-2 in FIG. 2, the satellite serves as a base station and has a processing function of the base station. In an architecture of a regenerative satellite with an inter-satellite link (regenerative satellite with inter-satellite link) shown in 2-3 in FIG. 2, the satellite serves as a base station and has a processing function of the base station. In an architecture of a regenerative satellite having a DU processing function of a base station shown in 2-4 in FIG. 2, the satellite serves as a DU and has a DU processing function. In an architecture of a satellite having an integrated access and backhaul (integrated access and backhaul, IAB) function, the satellite serves as an IAB.

### 2. Beam

The beam may be a predefined beamforming weight set in a codebook-based precoding context, or a dynamically defined beamforming weight set in a non-codebook-based precoding context (for example, eigen-based beamforming (eigen-based beamforming, EBB)). The beam may alternatively be a predefined set of phase-shift preprocessors for combining signals from antenna arrays in a radio frequency (radio frequency, RF) domain. For example, a terminal device may transmit an uplink signal or receive a downlink signal through codebook-based precoding, and a network device may form some radiation patterns through non-codebook-based precoding to send a downlink signal or receive an uplink signal.

The beam may be uniquely identified by using identification information of the beam. The identification information of the beam may be an index value, an identifier, a number, or the like.

### 3. SMTC information

The SMTC information indicates a window that is configured by a network device for a terminal device and that is used for SSB-based measurement. The SMTC information may include one or more of a length of a measurement window of an SSB of a cell, and a periodicity and an offset of the measurement window. One or more of the periodicity and the offset of the measurement window may be used to determine a time domain start position of the measurement window. The time domain start position and the length of the measurement window may be used to determine a time domain position of the measurement window. In this application, SSB-based measurement is used as an example. The SMTC information may be further extended to indicate a window that is configured by the network device for the terminal device and that is used to perform measurement based on another downlink reference signal (for example, a CSI-RS, a CS-RS, a US-RS, or a DMRS).

Optionally, a number (system frame number, SFN) of a system frame in which the measurement window is located meets the following formula: SFN mod T=floor (offset/10). SFN is the number of the system frame in which the measurement window is located, mod is a modulo operation, floor is a round-down operation, offset is the offset, and T=ceil (periodicity/10). ceil is a round-up operation, and periodicity is the periodicity of the measurement window. If the periodicity of the measurement window is greater than five subframes, a number of a subframe in which the measurement window is located meets the following formula: subframe=offset mod 10. If the periodicity of the measurement window is less than or equal to five subframes, a number of a subframe in which the measurement window is located meets the following formula: subframe=offset or subframe=offset+5. subframe is the number of the subframe in which the measurement window is located.

### 4. Cell handover

A cell in this application may be a TN cell or an NTN cell.

Cell handover in this application may be CHO handover or legacy handover (legacy handover).

A CHO mechanism is that handover is performed based on CHO trigger condition information (which may also be referred to as CHO execution condition information). A source network device may send CHO configuration information to a terminal device when quality of a communication link is good. The CHO configuration information includes CHO trigger condition information corresponding to one or more candidate cells and information about the one or more candidate cells.

The information about the candidate cell may include one or more of the following: a cell radio network temporary identifier (cell radio network temporary identifier, C-RNTI) allocated by the candidate cell to the terminal device, a random access channel (random access channel, RACH) resource (which may also be referred to as a random access resource, and the following uses the random access resource as an example for description) for accessing the candidate cell, an index corresponding to the candidate cell (for example, a measurement identifier (measID) corresponding to the candidate cell and/or a CHO reconfiguration identifier (CondReconfigId) corresponding to the candidate cell), a cell global identifier (cell global identifier, CGI) of the candidate cell, a physical cell identifier (physical cell identifier, PCI) of the candidate cell, frequency information corresponding to the candidate cell, a physical layer configuration parameter, a media access control (media access control, MAC) layer configuration parameter, a radio link control (radio link control, RLC) layer configuration parameter, a packet data convergence protocol (packet data convergence protocol, PDCP) layer configuration parameter, a service data adaptation protocol (service data adaptation protocol, SDAP) layer configuration parameter, and a radio resource control (radio resource control, RRC) layer configuration parameter corresponding to the candidate cell, and the like. The random access resource may include one or more of the following: a random access configuration periodicity, configuration information of a random access format, configuration information of at least one random access occasion (RACH occasion), configuration information of a preamble associated with each random access occasion (for example, a quantity of preambles and/or index information of the preamble), and the like. The frequency information of the candidate cell may include one or more of the following: an absolute frequency (absoluteFrequencySSB) of an SSB, an absolute frequency position (absoluteFrequencyPointA) of a reference resource module (common RB0), a frequency bandwidth list (frequencyBandList), and a carrier list (scs-SpecificCarrierList) specific to a subcarrier spacing (subcarrier spacing, SCS). For meanings of the foregoing terms, reference may be made, for example, to a specification of a protocol or a standard of a communication technology. This is not limited herein.

The CHO trigger condition information may also be referred to as CHO execution condition information. The CHO trigger condition information indicates a CHO trigger condition of the candidate cell. In this application, the CHO trigger condition information may include one or more of the following:

1. Based on signal quality: The signal quality in this application is a result obtained by measuring signal quality or signal energy based on a reference signal (for example, an SSB, a CSI-RS, a CS-RS, a US-RS, or a DMRS), for example, one or more of reference signal received power (reference signal received power, RSRP), reference signal received quality (reference signal received quality, RSRQ), a received signal strength indicator (received signal strength indicator, RSSI), and a signal to interference plus noise ratio (signal to interference plus noise ratio, SINR). For meanings of the foregoing terms, reference may be made, for example, to a specification of a protocol or a standard of a communication technology. The CHO trigger condition information may include a CHO trigger event type, a trigger quantity (trigger quantity), and a corresponding threshold. The CHO trigger event type may include an event A3, an event A4, an event A5, an event B1, an event B2, another trigger event type, or the like. For details, refer to a specification of a protocol or a standard of a communication technology. The trigger quantity is signal quality of a cell. For example, it is assumed that a CHO trigger event type configured for a candidate cell 1 is the event A3, a trigger quantity is signal quality of the cell, and a corresponding threshold is a threshold 1. When the cell signal quality of the candidate cell 1 is higher than the threshold 1, it may be considered that the candidate cell 1 meets a CHO trigger condition, and the candidate cell 1 may be determined as a target cell.

2. Based on position information: The CHO trigger condition information may include the position information. In a possible implementation, the position information may be position information of the terminal device on the ground, for example, longitude and latitude values. The longitude and latitude values may be used to determine an area or a fixed point. When a geographical position of the terminal device meets a longitude and latitude requirement (for example, the terminal device moves into the area or to the fixed point position indicated by the longitude and latitude values), the terminal device may perform handover. In another possible implementation, the position information may include a distance between the terminal device and a position reference point 1 corresponding to a source cell and a distance between the terminal device and a position reference point 2 corresponding to a target cell. For example, the CHO trigger condition information may include a first distance threshold and a second distance threshold. When the distance between the terminal device and the position reference point 1 corresponding to the source cell is greater than or equal to the first distance threshold, and the distance between the terminal device and the position reference point 2 corresponding to the target cell is less than or equal to the second distance threshold, the UE may perform handover. In still another possible implementation, the position information may be global positioning system (global positioning system, GPS) information, timing advance (timing advance, TA) information, or other information.

3. Based on time information or a timer: The CHO trigger condition information may include the time information. In a possible implementation, the CHO trigger condition information may be absolute time, for example, a moment (for example, coordinated universal time (coordinated universal time, UTC) 12:00), a time period (for example, UTC 12:00 to UTC 13:00, or a start moment and duration of a time period). When the absolute time is reached, the terminal device may perform handover. In another possible implementation, the CHO trigger condition information may be relative time, for example, valid duration of a timer. For example, after receiving CHO configuration information, the terminal device starts the timer, and when the valid duration of the timer is reached, the terminal device may perform handover.

Optionally, in this application, at least one of the three types of CHO trigger condition information may be configured as the CHO execution condition information. For example, a CHO execution event type, a corresponding threshold, and an absolute time value may be configured as CHO execution condition information. When absolute time is reached and signal quality of a corresponding candidate cell meets a condition, the terminal device may determine the candidate cell as a target cell, and perform handover.

Optionally, one candidate cell may correspond to one or more pieces of CHO trigger condition information. CHO trigger condition information corresponding to different candidate cells may be the same or different.

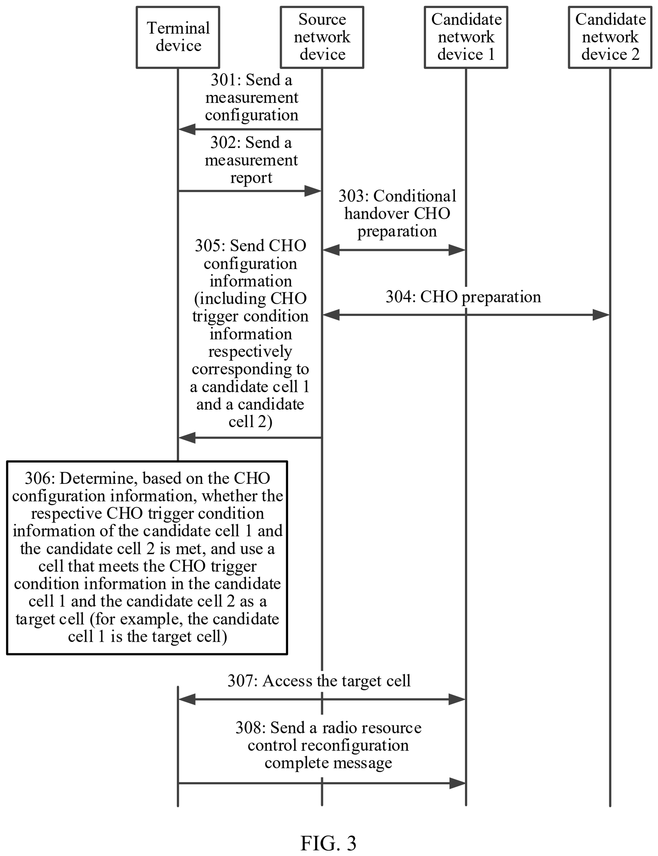

For ease of understanding, the following describes a CHO mechanism-based handover procedure of a terminal device with reference to FIG. 3 as an example. In this example, a source network device configures two candidate cells for a terminal device, and the two candidate cells are respectively managed by a candidate network device 1 and a candidate network device 2. The handover procedure may include the following steps.

301: The source network device sends measurement configuration information to the terminal device.

Correspondingly, the terminal device receives the measurement configuration information from the source network device.

Optionally, the measurement configuration information may be carried in an RRC reconfiguration message. The measurement configuration information is used by the terminal device to perform neighboring cell measurement. This is not limited herein.

A neighboring cell in this application is a neighboring cell of the terminal device, and includes one or more of an intra-frequency cell, an inter-frequency cell, and a serving cell. The intra-frequency cell is a cell whose SSB for measurement has a same central frequency (central frequency) and subcarrier spacing (subcarrier spacing, SCS) as a cell-defining (cell-defining) SSB of the serving cell. The inter-frequency cell is a cell whose SSB for measurement has a different central frequency and/or SCS from the cell-defining SSB of the serving cell. The serving cell is a cell that provides a service for the terminal device. The serving cell may be a cell managed by the source network device, a cell covered by the source network device, or a cell under jurisdiction of the source network device; or the serving cell belongs to the source network device.

Step 301 may be an optional step.

302: The terminal device sends a measurement report (measurement report) to the source network device, where the measurement report includes a measurement result of neighboring cell measurement performed by the terminal device based on the measurement configuration information.

Correspondingly, the source network device receives the measurement report from the terminal device.

The measurement result in this application may be signal quality of the neighboring cell of the terminal device, or the like. This is not limited herein.

Step 302 may be an optional step.

303: The source network device and the candidate network device 1 perform CHO handover preparation.

For example, the source network device sends a handover request message to the candidate network device 1, where the handover request message is used to request the candidate network device 1 to prepare for CHO handover; and the source network device receives a handover request acknowledgment message from the candidate network device 1, where the handover request acknowledgment message may include, for example, information about a candidate cell 1. The handover request acknowledgment message may be understood as carrying the information about the candidate cell 1 configured by the candidate network device 1 for the terminal device, and the information about the candidate cell 1 may be carried in a form of an RRC message of the candidate network device 1.

304: The source network device and the candidate network device 2 perform CHO handover preparation.

For example, the source network device sends a handover request message to the candidate network device 2, where the handover request message is used to request the candidate network device 2 to prepare for CHO handover; and the source network device receives a handover request acknowledgment message from the candidate network device 2, where the handover request acknowledgment message may include, for example, information about a candidate cell 2. The handover request acknowledgment message may be understood as carrying the information about the candidate cell 2 configured by the candidate network device 2 for the terminal device, and the information about the candidate cell 2 may be carried in a form of an RRC message of the candidate network device 2.

305: The source network device may send CHO configuration information to the terminal device, where the CHO configuration information includes CHO trigger condition information respectively corresponding to the candidate cell 1 and the candidate cell 2.

Correspondingly, the terminal device receives the CHO configuration information from the source network device.

The CHO configuration information may be carried in an RRC message generated by the source network device, for example, an RRC reconfiguration message. The CHO configuration information may further include the information about the candidate cell 1 and the information about the candidate cell 2. Optionally, CHO trigger condition information of the candidate cell 1 and CHO trigger condition information of the candidate cell 2 are information generated by the source network device for the terminal device.

When the CHO trigger condition information of the candidate cell 1 is CHO trigger condition information based on time information, the source network device may further send the CHO trigger condition information to the candidate network device 1. When the CHO trigger condition information of the candidate cell 2 is CHO trigger condition information based on time information, the source network device may further send the CHO trigger condition information to the candidate network device 2.

306: The terminal device determines, based on the CHO configuration information, whether the respective CHO trigger condition information of the candidate cell 1 and the candidate cell 2 is met, and uses a cell that meets the CHO trigger condition information in the candidate cell 1 and the candidate cell 2 as a target cell (for example, the candidate cell 1 is the target cell).

307: The terminal device accesses the target cell.

For example, the terminal device initiates random access to the target cell on a random access resource. A specific random access procedure is not limited herein.

Optionally, before step 307, the terminal device may perform synchronization based on a reference signal of the target cell. A specific synchronization process is not limited herein. This indicates that after determining the target cell, the terminal device needs to wait for the reference signal of the target cell to arrive.

It should be noted that synchronization in this application may also be understood as precise synchronization. Precise synchronization may be referred to as fine time tracking and obtaining all timing information of the target cell. For meanings of the foregoing terms, reference may be made, for example, to a specification of a protocol or a standard of a communication technology.

308: The terminal device may send an RRC reconfiguration complete message to the candidate network device 1 (that is, a target network device).

Correspondingly, the candidate network device 1 receives the RRC reconfiguration complete message from the terminal device.

The RRC reconfiguration complete message indicates that the terminal device has successfully accessed the candidate network device 1. Optionally, the RRC reconfiguration complete message may further include an identifier of the target cell.

It may be understood that after the terminal device determines the candidate cell 1 as the target cell, the candidate network device 1 may also be referred to as the target network device.

It should be noted that FIG. 3 is merely an example of the CHO procedure, and the CHO procedure may have other variations. This is not limited in this application. The steps in FIG. 3 may be optionally performed, and an execution sequence of the steps may be changed.

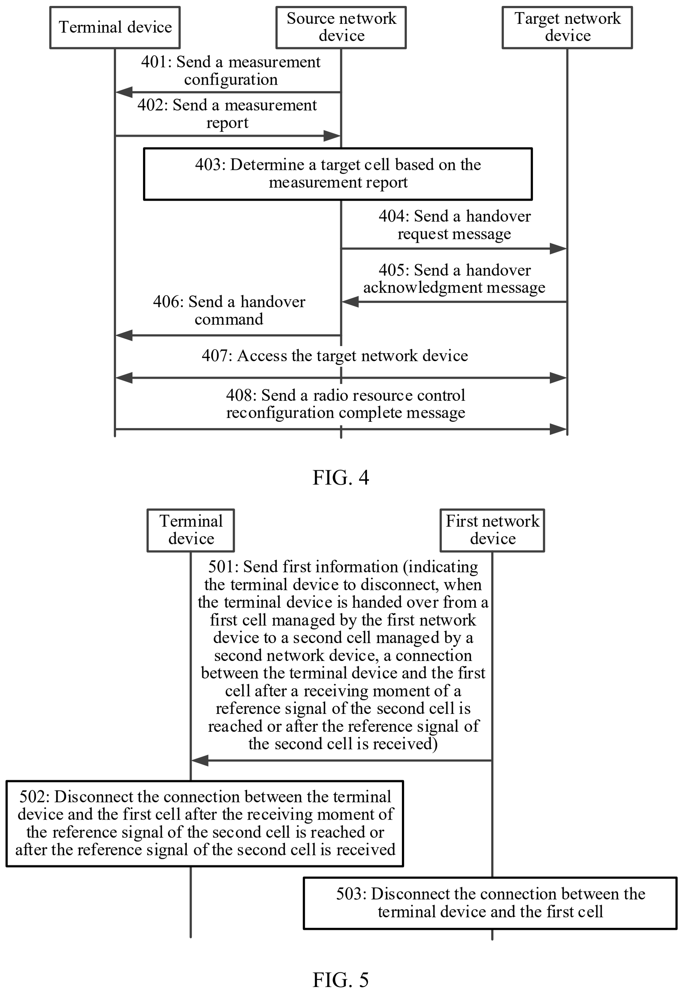

The legacy handover may also be referred to as handover (handover), common handover, general handover, or the like, or has another name. This is not limited. For ease of understanding, the following describes a legacy handover-based handover procedure of a terminal device with reference to FIG. 4 as an example. The handover procedure may include the following steps.

401: A source network device sends measurement configuration information to a terminal device.

Correspondingly, the terminal device receives the measurement configuration information from the source network device.

Step 401 is similar to step 301 in FIG. 3, and details are not described herein again.

402: The terminal device sends a measurement report to the source network device, where the measurement report includes a measurement result of neighboring cell measurement performed by the terminal device based on the measurement configuration information.

Correspondingly, the source network device receives the measurement report from the terminal device.

Step 402 is similar to step 302 in FIG. 3, and details are not described herein again.

403: The source network device determines a target cell based on the measurement report.

For example, a cell with highest signal quality in the measurement report is used as the target cell.

404: The source network device sends a handover request message to a target network device to which the target cell belongs, where the handover request message includes identification information of the target cell and the like.

Correspondingly, the target network device receives the handover request message from the source network device.

The identification information of the target cell is used to uniquely identify the target cell, and may be, for example, a CGI or a PCI. This is not limited herein.

Optionally, the source network device may further include identification information of the terminal device in the handover request message. The identification information of the terminal device may be used to uniquely identify the terminal device, and may be, for example, a subscription permanent identifier (subscription permanent identifier, SUPI) or a radio network temporary identifier (Radio Network Temporary Identifier, RNTI). This is not limited herein.

405: The target network device sends a handover acknowledgment message to the source network device based on the handover request message.

Correspondingly, the source network device receives the handover acknowledgment message from the target network device.

For example, the target network device may determine, based on a status of the target network device (for example, a quantity of terminals connected to the target network device), whether to allow access of the terminal device. If access of the terminal device is allowed, the target network device sends the handover acknowledgment request to the source network device, where the handover acknowledgment message includes information about the target cell. The information about the target cell may include one or more of the following: a C-RNTI allocated by the target cell to the terminal device, a random access resource for accessing the target cell, a PCI of the target cell, frequency information corresponding to the target cell, a physical layer configuration parameter, a MAC layer configuration parameter, an RLC layer configuration parameter, a PDCP layer configuration parameter, an SDAP layer configuration parameter, and an RRC layer configuration parameter corresponding to the target cell, and the like.

Optionally, the target network device may generate a handover command, and the handover command carries the information about the target cell. The target network device may include the handover command in the handover acknowledgment message. The handover command may be understood as an RRC message. The handover command indicates the terminal device to be handed over from the source network device to the target network device.

406: The source network device sends a handover command to the terminal device, where the handover command indicates the terminal device to be handed over from the source network device to the target network device.

Correspondingly, the terminal device receives the handover command from the source network device.

407: The terminal device accesses the target network device.

For example, the terminal device initiates random access to the target network device on a random access resource. A specific random access procedure is not limited herein.

Optionally, before step 407, the terminal device may perform synchronization based on a reference signal of the target network device. A specific synchronization process is not limited herein. This indicates that after receiving the handover command, the terminal device needs to wait for the reference signal of the target network device to arrive.

408: The terminal device sends an RRC reconfiguration complete message to the target network device.

Correspondingly, the target network device receives the RRC reconfiguration complete message from the terminal device.

The RRC reconfiguration complete message indicates that the terminal device has successfully accessed the target network device.

It should be noted that FIG. 4 is merely an example of the legacy handover procedure, and the legacy handover procedure may have other variations. This is not limited in this application. The steps in FIG. 4 may be optionally performed, and an execution sequence of the steps may be changed.

### 5. Handover interruption time

The handover interruption time is duration in which a terminal device cannot exchange data with any access network device in either a source network device or a target network device in a handover process.

For example, handover interruption time in FIG. 3 is time from a moment at which the terminal device starts to perform CHO to the target cell to a moment at which the terminal device starts to perform data transmission in the target cell (for example, a moment at which the terminal device starts to initiate random access) (the interruption time is the time between when the UE starts to execute the conditional handover to the target cell and the time UE starts transmission of the new PRACH). Optionally, the handover interruption time in FIG. 3 needs to be less than *Tᵢₙₜₑᵣᵣᵤₚₜ*. *Tᵢₙₜₑᵣᵣᵤₚₜ* meets the following formula: *Tᵢₙₜₑᵣᵣᵤₚₜ = T_{processing} + T_{IU} + T*_{Δ} *+ T_{margin}. T_{processing}* is time for processing by the terminal device (*T_{processing}* is the time for UE processing), and *T_{processing}* may be up to 20 milliseconds (ms) (*T_{processing}* can be up to 20 ms). *T_{IU}* is interruption uncertainty in obtaining the 1^{st} available PRACH occasion in a new cell (*T_{IU}* is the interruption uncertainty in acquiring the first available PRACH occasion in the new cell). *T_{IU}* may be up to a sum of an SSB to PRACH occasion association periodicity and 10 ms (*T_{IU}* can be up to the summation of SSB to PRACH occasion association period and 10 ms). For the SSB to PRACH occasion association periodicity, refer to a definition in the standard 38.133. This is not limited herein. Optionally, a value of *T_{IU}* may depend on a PRACH configuration used in the target cell (the actual value of *T_{IU}* shall depend upon the PRACH configuration used in the target cell). *T*_{Δ} is time for fine time tracking and obtaining all timing information of the target cell (*T*_{Δ} is the time for fine time tracking and acquiring full time information of the target cell), and *T*_{Δ} = *T*ᵣₛ. *T*_{Δ} may also be referred to as time required for precise synchronization. If an SMTC configuration for the target cell has been provided in a handover command, *T*ᵣₛ is an SMTC periodicity of a target NR cell (that is, the target cell). If an SMTC configuration for the target cell has not been provided in a handover command, *T*ᵣₛ is an SMTC configuration included in a measurement object, in measurement objects, that has a same SSB frequency and SCS as a target NR cell. If the terminal device is not provided with the SMTC periodicity or the measurement object at the frequency, assuming that an SSB transmission periodicity is 5 ms, a requirement in this clause is applied in the case of *T*ᵣₛ=5 ms. If the SSB transmission periodicity is not 5 ms, there is no requirement. If the UE is provided with a higher layer in TS 38.331 (2) signaling of smtc2 prior to the handover command, *T*ᵣₛ follows smtc1 or smtc2 according to a PCI of the target cell. (*T*ᵣₛ is the SMTC periodicity of the target NR cell if the UE has been provided with an SMTC configuration for the target cell in the handover command, otherwise *T*ᵣₛ is the SMTC configured in the meas Object NR having the same SSB frequency and subcarrier spacing. If the UE is not provided SMTC configuration or measurement object on this frequency, the requirement in this clause is applied with *T*ᵣₛ = 5 ms assuming the SSB transmission periodicity is 5 ms. There is no requirement if the SSB transmission periodicity is not 5 ms. If the UE has been provided with a higher layer in TS 38.331 (2) signaling of smtc2 prior to the handover command, *T*ᵣₛ follows smtc1 or smtc2 according to the physical cell ID of the target cell.) *T_{margin}* is time required for SSB post-processing ( *T_{margin} is time for SSB post - processing). T_{margin}* may be up to 2 ms.

For another example, handover interruption time in FIG. 4 is time from a moment at which the terminal device receives the handover command to a moment at which the terminal device starts to perform transmission in the target cell (for example, a moment at which the terminal device starts to initiate random access). Optionally, the handover interruption time in FIG. 4 may be less than *Tᵢₙₜₑᵣᵣᵤₚₜ. Tᵢₙₜₑᵣᵣᵤₚₜ* meets the following formula: *Tᵢₙₜₑᵣᵣᵤₚₜ* = *T_{search} + T_{processing} + T_{IU} + T*_{Δ} *+ T_{margin}. T_{search}* is time required by the terminal device to search for the target cell when the terminal device receives the handover command and the target cell is not a known cell. When the target cell is a known cell, *T_{search} =* 0 *ms.* If the target cell is an unknown intra-frequency cell and Es/Iot of the target cell is greater than or equal to -2 dB, *T_{search}*=*T*ᵣₛ. If the target cell is an unknown inter-frequency cell and Es/Iot of the target cell is greater than or equal to -2 dB, *T_{search}*=3 ** T*ᵣₛ. (*T_{search}* is the time required to search the target cell when the target cell is not already known when the handover command is received by the UE. If the target cell is known, then *T_{search}*=0 ms. If the target cell is an unknown intra-frequency cell and the target cell Es/Iot≥-2 dB, then *T_{search}=T*ᵣₛ. If the target cell is an unknown inter-frequency cell and the target cell Es/Iot≥-2 dB, then *T_{search}*=3**T*ᵣₛ ms.) Content of *T_{processing}, T_{IU}, T*_{Δ}, and *T_{margin}* is the same as the foregoing descriptions.

It can be learned that the handover interruption time is long (for example, *T*_{Δ} is related to the SMTC periodicity, where the SMTC periodicity may be 5 ms to 160 ms, and a longer SMTC periodicity indicates longer handover interruption time). In view of this, this application provides a communication method, to resolve this problem.

The following describes embodiments of this application in detail. Specifically, a terminal device in the following descriptions may be the terminal device in FIG. 1, and a first network device and a second network device in the following descriptions may be the network devices in FIG. 1. It should be noted that names of messages between network elements, names of parameters in the messages, or the like in the following embodiments are merely examples, and there may be other names during specific implementation. This is not specifically limited in embodiments of this application.

FIG. 5 shows a communication method according to an embodiment of this application. The communication method includes but is not limited to the following steps.

501: A first network device sends first information to a terminal device, where the first information indicates the terminal device to disconnect, when the terminal device is handed over from a first cell managed by the first network device to a second cell managed by a second network device, a connection between the terminal device and the first cell after a receiving moment of a reference signal of the second cell is reached or after the reference signal of the second cell is received.

Correspondingly, the terminal device receives the first information from the first network device.

In a possible implementation, in a CHO handover scenario, it may also be described as follows: The first information indicates the terminal device to disconnect, when the terminal device is handed over from the first cell managed by the first network device to the second cell managed by the second network device, the connection between the terminal device and the first cell after trigger condition information of the second cell is met, and after the receiving moment of the reference signal of the second cell is reached or after the reference signal of the second cell is received (or after a trigger condition of the second cell is met, and after a next receiving moment of the reference signal of the second cell is reached or after the reference signal of the second cell is received next time).

In another possible implementation, in a scenario in which the first cell sends a handover command to the terminal device, it may also be described as follows: The first information indicates the terminal device to disconnect, when the terminal device is handed over from the first cell managed by the first network device to the second cell managed by the second network device, the connection between the terminal device and the first cell after the terminal device receives the handover command, and after the receiving moment of the reference signal of the second cell is reached or after the reference signal of the second cell is received (or after the terminal device receives the handover command, and after a next receiving moment of the reference signal of the second cell is reached or after the reference signal of the second cell is received next time).

In still another possible implementation, it may also be described as follows: The first information indicates the terminal device not to disconnect, when the terminal device is handed over from the first cell managed by the first network device to the second cell managed by the second network device, the connection between the terminal device and the first cell before the receiving moment of the reference signal of the second cell is reached or before the reference signal of the second cell is received.

Optionally, the first information may be carried in an RRC message, for example, an RRC reconfiguration message. For example, when CHO handover is used, the first information is carried in an RRC message (for example, an RRC reconfiguration message). Optionally, when CHO handover is used, the first information may alternatively be carried in CHO configuration information. When legacy handover is used, the RRC message may also be understood as a handover command corresponding to the second cell, that is, a handover command sent by the first network device to the terminal device for handover to the second cell.

Optionally, the connection between the terminal device and the first cell may be replaced with a connection between the terminal device and the first network device. This is not limited herein.

Optionally, a reference signal mentioned in this application may be an SSB, a CSI-RS, a CS-RS, a US-RS, a DMRS, or the like. For example, the reference signal of the second cell may be an SSB or a reference signal obtained by performing scrambling based on an identifier allocated by the second network device to the terminal device. The reference signal obtained by performing scrambling based on the identifier (for example, a scrambling identifier) allocated by the second network device to the terminal device may also be referred to as a dedicated reference signal, for example, a CSI-RS, a CS-RS, a US-RS, or a DMRS. Optionally, the CSI-RS may be an aperiodic CSI-RS. This is not limited herein. A reference signal of a cell (for example, the second cell) mentioned in this application may be used by the terminal device to perform downlink (precise) synchronization with the cell. A specific synchronization process is not limited herein.

It should be noted that a receiving moment of a reference signal mentioned in this application is a moment at which the terminal device receives the reference signal. For example, the receiving moment of the reference signal of the second cell is a moment at which the terminal device receives the reference signal of the second cell.

Optionally, the receiving moment of the reference signal of the second cell may be the same as or different from the moment at which the terminal device receives the reference signal of the second cell. For example, the receiving moment of the reference signal of the second cell is earlier than the moment at which the terminal device receives the reference signal of the second cell.

In a possible implementation, the terminal device may determine a receiving moment of a reference signal of a cell (for example, the second cell) in any one of the following manners. Details are as follows:
Manner 1 for determining a receiving moment of a reference signal:
The terminal device determines the receiving moment of the reference signal of the second cell based on SMTC information of the second cell. In a possible implementation, the method may further include: The terminal device receives the SMTC information from the first network device. For example, the SMTC information is configured by the second network device, in other words, the first network device may obtain the SMTC information from the second network device, so that the first network device delivers the SMTC information to the terminal device. Optionally, the SMTC information is referenced to downlink timing of the first cell (the downlink timing of the first cell is a system frame number and/or a subframe number of the first cell that are/is obtained by the terminal device from the first cell), in other words, a time domain start position of a measurement window of the reference signal of the second cell included in the SMTC information is determined based on the system frame number and/or the subframe number of the first cell. For example, a system frame number and a subframe number of the measurement window of the reference signal of the second cell respectively refer to the system frame number and the subframe number of the first cell. In this case, the SMTC information may be included in the CHO configuration information or the handover command. For another example, the SMTC information is configured by the first network device. In this case, the SMTC information and the CHO configuration information may be carried in a same message or different messages. For example, the SMTC information and the CHO configuration information may be carried in one RRC message (for example, an RRC reconfiguration message), or the SMTC information and the CHO configuration information may be carried in different RRC messages (for example, RRC reconfiguration messages). For example, the SMTC information and measurement configuration information may be carried in one RRC message (for example, an RRC reconfiguration message).

Manner 2 for determining a receiving moment of a reference signal:
The terminal device receives third information from the first network device, where the third information indicates the receiving moment of the reference signal of the second cell. The third information may be carried in an RRC message (for example, an RRC reconfiguration message). For example, the third information may be generated by the first network device. For another example, the third information may be generated by the second network device, and the first network device may obtain the third information from the second network device, so that the first network device delivers the third information to the terminal device. Optionally, the second network device receives position information of the terminal device from the first network device. The second network device may determine the receiving moment of the reference signal of the second cell based on the position information of the terminal device. For example, the position information of the terminal device may be carried in a handover request message. The position information of the terminal device may be position information of the terminal device on the ground, for example, longitude and latitude values; or may be geographical area information, where for example, a geographical position of the terminal is located in a geographical area indicated by the geographical area information. The geographical area information may be represented by a latitude-and-longitude coordinate interval value including longitude and latitude coordinates of the terminal device.

Manner 3 for determining a receiving moment of a reference signal:
The terminal device receives third configuration information from the first network device, where the third configuration information is used to determine a resource of the reference signal of the second cell, and the resource of the reference signal of the second cell may include the receiving moment of the reference signal of the second cell. Optionally, the third configuration information may include at least one of the following: a frequency domain resource (including one or more of distribution of reference signals in one physical resource block (physical resource block, PRB), a position of a PRB occupied by the reference signal, a quantity of PRBs occupied by the reference signal, and the like), a time domain resource (including a symbol index in a slot and the like), a quantity of ports used to send a reference signal, and a code division multiplexing (code division multiplexing, CDM) type of the reference signal (the CDM type may be used to define an orthogonal cover code (orthogonal cover code, OCC), for example, one or more of noCDM, fd-CDM2, cdm4-fd2-td2, cdm8-fd2-td4, and the like), density, a power factor, a periodicity, and the like.

In any one of the foregoing implementations 1 to 3, the terminal device may determine the receiving moment of the reference signal of the second cell, so that after the receiving moment of the reference signal of the second cell is reached, the terminal device can disconnect the connection between the terminal device and the first cell, and the terminal device can learn of the receiving moment of the reference signal.

Optionally, the second cell indicated by the first information in step 501 may be a specific cell, that is, a specific cell, for example, a target cell, is limited; or the second cell indicated by the first information in step 501 may be a general candidate cell, that is, a specific cell is not limited.

For example, when legacy handover is used, the second cell is indicated by the first network device to the terminal device. For example, the second cell is indicated by the first network device to the terminal device by using a handover command. In other words, the second cell indicated by the first information in step 501 may be a specific cell, that is, a specific cell, for example, the target cell, is limited.

For another example, when CHO handover is used, the second cell is determined by the terminal device based on the CHO configuration information. In other words, the second cell indicated by the first information in step 501 may be a general candidate cell, that is, a specific cell is not limited. For example, the terminal device receives the CHO configuration information from the first network device, where the CHO configuration information includes CHO trigger condition information corresponding to one or more candidate cells. For the CHO trigger condition information, refer to the foregoing related descriptions. Details are not described herein again. The second cell may be any one of the following cells. Details are as follows:
1. The second cell is a candidate cell, in the one or more candidate cells, that meets the CHO trigger condition information. For example, the second cell is the 1^{st} candidate cell that meets the CHO trigger condition information in one or more candidate cells. For example, it is assumed that there are three candidate cells, for example, a candidate cell 1 to a candidate cell 3. In the three candidate cells, if the 1^{st} cell that meets the CHO trigger condition information is the candidate cell 1, the second cell is the candidate cell 1. For another example, the second cell is any candidate cell that meets the CHO trigger condition information in the one or more candidate cells. For example, it is assumed that there are three candidate cells, for example, a candidate cell 1 to a candidate cell 3. If the three candidate cells all meet the corresponding CHO trigger condition information, the second cell may be any candidate cell in the candidate cell 1 to the candidate cell 3. For example, the terminal device may select one cell from the candidate cell 1 to the candidate cell 3 as the target cell, that is, select the second cell.
2. The second cell is a candidate cell, in the one or more candidate cells, that meets the CHO trigger condition information and of which a receiving moment of a reference signal is reached. For example, the second cell is a candidate cell, in the one or more candidate cells, that meets the CHO trigger condition information and of which a receiving moment of a reference signal is first reached. For example, it is assumed that there are three candidate cells, for example, a candidate cell 1 to a candidate cell 3. In the three candidate cells, the candidate cell 1 meets CHO trigger condition information of the candidate cell 1, and a candidate cell 2 meets CHO trigger condition information of the candidate cell 2. However, a receiving moment of a reference signal of the candidate cell 1 is later than a receiving moment of a reference signal of the candidate cell 2, in other words, the receiving moment of the reference signal of the candidate cell 1 is reached later than the receiving moment of the reference signal of the candidate cell 2. Therefore, the second cell is the candidate cell 2. Optionally, for the case in which the first information indicates the terminal device to disconnect, when the terminal device is handed over from the first cell managed by the first network device to the second cell managed by the second network device, the connection between the terminal device and the first cell after the receiving moment of the reference signal of the second cell is reached, the second cell is a candidate cell, in the one or more candidate cells, that meets the CHO trigger condition information and of which a receiving moment of a reference signal is reached. This indicates that the terminal device determines the second cell, and the receiving moment of the reference signal of the second cell is also reached, so that a process of waiting for the receiving moment of the reference signal of the second cell to be reached is reduced, and therefore a handover delay is reduced.
3. The second cell is a candidate cell, in the one or more candidate cells, that meets the CHO trigger condition information and whose reference signal is received. For example, the second cell is a candidate cell, in the one or more candidate cells, that meets the CHO trigger condition information and whose reference signal is first received. For example, it is assumed that there are three candidate cells, for example, a candidate cell 1 to a candidate cell 3. In the three candidate cells, the candidate cell 1 meets CHO trigger condition information of the candidate cell 1, and a candidate cell 2 meets CHO trigger condition information of the candidate cell 2. However, the terminal device first receives a reference signal of the candidate cell 1, in other words, a moment at which the terminal device receives the reference signal of the candidate cell 1 is earlier than a moment at which the terminal device receives a reference signal of the candidate cell 2. Therefore, the second cell is the candidate cell 1. Optionally, for the case in which the first information indicates the terminal device to disconnect, when the terminal device is handed over from the first cell managed by the first network device to the second cell managed by the second network device, the connection between the terminal device and the first cell after the reference signal of the second cell is received, the second cell is a candidate cell, in the one or more candidate cells, that meets the CHO trigger condition information and whose reference signal is received. This indicates that the terminal device determines the second cell, and the reference signal of the second cell is also received, so that a handover delay is reduced.

Optionally, the CHO configuration information and the first information may be carried in a same message or different messages. For example, the CHO configuration information and the first information may be carried in one RRC message (for example, an RRC reconfiguration message), or the CHO configuration information and the first information may be carried in different RRC messages (for example, RRC reconfiguration messages).

502: The terminal device disconnects the connection between the terminal device and the first cell after the receiving moment of the reference signal of the second cell is reached or after the reference signal of the second cell is received.

Optionally, for a method in which the terminal device determines the receiving moment of the reference signal of the second cell, refer to the descriptions in step 501.

During CHO handover, after the terminal device determines that the trigger condition information of the second cell is met, the terminal device does not immediately disconnect the connection to the first cell. Instead, the terminal device disconnects the connection between the terminal device and the first cell after the receiving moment of the reference signal of the second cell is reached or after the reference signal of the second cell is received. For example, the terminal device determines, based on the first information, to disconnect the connection between the terminal device and the first cell after the receiving moment of the reference signal of the second cell is reached or after the reference signal of the second cell is received.

In the scenario in which the first cell sends the handover command to the terminal device, after receiving the handover command, the terminal device does not immediately disconnect the connection to the first cell. Instead, the terminal device disconnects the connection between the terminal device and the first cell after the receiving moment of the reference signal of the second cell is reached or after the reference signal of the second cell is received. For example, the terminal device determines, based on the first information, to disconnect the connection between the terminal device and the first cell after the receiving moment of the reference signal of the second cell is reached or after the reference signal of the second cell is received.

Optionally, "after the receiving moment of the reference signal of the second cell is reached" may also be understood as "after the receiving moment of the reference signal of the second cell is reached". For example, if the receiving moment of the reference signal of the second cell is 5:00, the terminal device may disconnect the connection between the terminal device and the first cell after 5:00.

The terminal device may specifically disconnect the connection to the first cell in the following four implementations:
Implementation 1 for the terminal device to disconnect the connection:
The terminal device receives first configuration information from the first network device, where the first configuration information is used to determine a random access resource for accessing the second cell, and the random access resource of the second cell includes a random access moment (for example, the random access resource of the second cell includes configuration information of a random access occasion, and the configuration information is used to determine the random access moment). The terminal device disconnects the connection between the terminal device and the first cell at the random access moment. The random access moment is later than the receiving moment of the reference signal of the second cell, or the random access moment is later than the moment at which the terminal device receives the reference signal of the second cell. Optionally, the random access moment may be a random access moment corresponding to a beam with highest (or best) signal quality that is found by the terminal device. Optionally, the random access resource of the second cell further includes another resource, for example, a frequency domain resource. This is not limited herein. Content specifically included in the first configuration information is not limited herein. For details, refer to a specification of a protocol or a standard of a communication technology. When CHO handover is used, the first configuration information and the CHO configuration information may be carried in a same message or different messages. For example, the first configuration information and the CHO configuration information may be carried in one RRC message (for example, an RRC reconfiguration message), or the first configuration information and the CHO configuration information may be carried in different RRC messages (for example, RRC reconfiguration messages). When legacy handover is used, the first configuration information may be carried in a handover command or sent separately. In the foregoing implementation, the receiving moment of the reference signal of the second cell or the moment at which the reference signal of the second cell is received is earlier than the random access moment, and the terminal device disconnects the connection between the terminal device and the first cell at the random access moment. In other words, the time for the terminal device to maintain the connection to the first cell is prolonged, and therefore the handover interruption time can be shortened.

Implementation 2 for the terminal device to disconnect the connection:
The terminal device receives second configuration information from the first network device, where the second configuration information is used to determine a PUSCH resource for accessing the second cell, and the PUSCH resource includes a sending moment of a PUSCH. The terminal device disconnects the connection between the terminal device and the first cell at the sending moment of the PUSCH. The sending moment of the PUSCH is later than the receiving moment of the reference signal of the second cell, or the sending moment of the PUSCH is later than the moment at which the terminal device receives the reference signal of the second cell. Optionally, the PUSCH resource further includes another resource, for example, a frequency domain resource. This is not limited herein. Content specifically included in the second configuration information is not limited herein. For details, refer to a specification of a protocol or a standard of a communication technology. When CHO handover is used, the second configuration information and the CHO configuration information may be carried in a same message or different messages. For example, the second configuration information and the CHO configuration information may be carried in one RRC message (for example, an RRC reconfiguration message), or the second configuration information and the CHO configuration information may be carried in different RRC messages (for example, RRC reconfiguration messages). When legacy handover is used, the second configuration information may be carried in a handover command or sent separately. In the foregoing implementation, the receiving moment of the reference signal of the second cell or the moment at which the reference signal of the second cell is received is earlier than the sending moment of the PUSCH, and the terminal device disconnects the connection between the terminal device and the first cell at the sending moment of the PUSCH. In other words, the time for the terminal device to maintain the connection to the first cell is prolonged, and therefore the handover interruption time can be shortened.

Implementation 3 for the terminal device to disconnect the connection:
After accessing the second cell, the terminal device disconnects the connection between the terminal device and the first cell after the next receiving moment of the reference signal of the second cell is reached. A previous receiving moment of the reference signal of the second cell is the receiving moment of the reference signal of the second cell in step 502. In the foregoing implementation, the previous receiving moment of the reference signal of the second cell is earlier than a moment at which the second cell is accessed, the moment at which the second cell is accessed is earlier than the next receiving moment of the reference signal of the second cell, and the terminal device disconnects the connection between the terminal device and the first cell after the next receiving moment of the reference signal of the second cell is reached. In other words, the time for the terminal device to maintain the connection to the first cell is prolonged, and therefore the handover interruption time can be shortened.

Implementation 4 for the terminal device to disconnect the connection:
After accessing the second cell, the terminal device disconnects the connection between the terminal device and the first cell after the reference signal of the second cell is received next time. A moment at which the terminal device receives the reference signal of the second cell last time is the moment at which the terminal device receives the reference signal of the second cell in step 502. In the foregoing implementation, the moment at which the terminal device receives the reference signal of the second cell last time is earlier than a moment at which the second cell is accessed, the moment at which the second cell is accessed is earlier than the moment at which the terminal device receives the reference signal of the second cell next time, and the terminal device disconnects the connection between the terminal device and the first cell after the reference signal of the second cell is received next time. In other words, the time for the terminal device to maintain the connection to the first cell is prolonged, and therefore the handover interruption time can be shortened.

Optionally, in the implementation 1 or implementation 2, that the first information indicates the terminal device to disconnect, when the terminal device is handed over from the first cell managed by the first network device to the second cell managed by the second network device, the connection between the terminal device and the first cell after the receiving moment of the reference signal of the second cell is reached or after the reference signal of the second cell is received may also be understood as follows: The first information indicates the terminal device to disconnect, when the terminal device is handed over from the first cell managed by the first network device to the second cell managed by the second network device, the connection between the terminal device and the first cell at an uplink transmission moment of the terminal device to the second cell (in other words, the terminal device may maintain the connection to the first cell before the uplink transmission moment of the terminal device to the second cell is reached). For example, in the CHO handover scenario, it may also be described as that the first information indicates the terminal device to disconnect, when the terminal device is handed over from the first cell managed by the first network device to the second cell managed by the second network device, the connection between the terminal device and the first cell at the uplink transmission moment of the terminal device to the second cell after the trigger condition of the second cell is met. For another example, in the scenario in which the first cell sends the handover command to the terminal device, it may also be described as that the first information indicates the terminal device to disconnect, when the terminal device is handed over from the first cell managed by the first network device to the second cell managed by the second network device, the connection between the terminal device and the first cell at the uplink transmission moment of the terminal device to the second cell after the terminal device receives the handover command. The uplink transmission moment of the terminal device to the second cell herein may be the random access moment in the implementation 1 or the sending moment of the PUSCH in the implementation 2.

503: The first network device disconnects the connection between the terminal device and the first cell.

Optionally, that the first network device disconnects the connection between the terminal device and the first cell may include: disconnecting the connection between the terminal device and the first cell at a first moment. The first moment may be specifically implemented in the following plurality of manners:
1. The first moment is determined based on a moment at which second information from the terminal device is received or a moment at which fourth information from the second network device is received. For example, the first moment is the moment at which the second information is received (that is, within preset time, the first network device receives the second information from the terminal device, and the first network device disconnects the connection between the terminal device and the first cell) or any moment after the second information is received. For another example, the first moment is the moment at which the fourth information is received (that is, within preset time, the first network device receives the fourth information from the terminal device, and the first network device disconnects the connection between the terminal device and the first cell) or any moment after the fourth information is received. The second information indicates that the terminal device is to disconnect the connection between the terminal device and the first cell, the fourth information indicates that the terminal device has been handed over to the second cell, the fourth information may be carried in a handover success message, and the preset time may be predefined in a protocol or (pre)configured. For example, the preset time is configured by the first network device. In a possible implementation, the method may further include: The first network device stops scheduling data transmission between the first cell and the terminal device after the receiving moment of the reference signal of the second cell is reached. The receiving moment of the reference signal of the second cell is earlier than the first moment. Optionally, the first network device may determine a receiving moment of a reference signal of a cell (for example, the second cell). For example, the first network device may receive the SMTC information of the second cell from the second network device, to determine the receiving moment of the reference signal of the second cell based on the SMTC information of the second cell. For another example, the first network device may obtain identification information of a beam corresponding to the reference signal received by the terminal device in the second cell. (For example, the first network device receives a measurement report from the terminal device, where the measurement report includes the identification information of the beam. For another example, the first network device receives the identification information of the beam from the second network device, where the beam may also be understood as a beam used when the terminal device accesses the second cell. For example, the terminal device initiates random access on a first beam in the second cell. In this case, the identification information of the beam and the fourth information may be carried in a same message (for example, a handover success message) or different messages.) The first network device obtains a sending moment of the beam based on the identification information of the beam. The first network device determines the receiving moment of the reference signal of the second cell based on the sending moment of the beam and a difference between a receiving moment of a reference signal of the first cell and the receiving moment of the reference signal of the second cell.
2. The first moment is determined based on the receiving moment of the reference signal of the second cell. For example, the first moment is the receiving moment of the reference signal of the second cell or any moment after the receiving moment.
3. The first moment is determined based on the next receiving moment of the reference signal of the second cell after the fourth information from the second network device is received. For example, the first moment is the next receiving moment or any moment after the next receiving moment. Optionally, that the first network device may further determine the next receiving moment of the reference signal of the second cell is specifically as follows: The first network device may receive, from the second network device, identification information of a beam corresponding to the reference signal received by the terminal device in the second cell (the beam may also be understood as a beam used when the terminal device accesses the second cell, where for example, the terminal device initiates random access on a first beam in the second cell). The first network device obtains a sending moment of the beam based on the identification information of the beam. The first network device determines the receiving moment of the reference signal of the second cell based on the sending moment of the beam and a difference between a receiving moment of a reference signal of the first cell and the receiving moment of the reference signal of the second cell. Optionally, the identification information of the beam and the fourth information may be carried in a same message (for example, a handover success message) or different messages.
4. The first moment is determined, after fourth information from the second network device is received, based on the moment at which the terminal device receives the reference signal of the second cell next time. For example, the first moment is the moment at which the terminal device receives the reference signal of the second cell next time or any moment after the moment.
5. The first moment is indicated by the second network device. For example, the first moment is indicated by the second network device to the first network device by using a handover success message.

In the foregoing implementation, the first network device may disconnect the connection between the terminal device and the first cell at the first moment. In other words, the first network device may learn that the connection between the terminal device and the first cell is disconnected. This avoids a problem that a scheduling indicator (for example, an MCS) is reduced because the first network device continuously schedules the terminal device when the first network device does not know that the connection between the terminal device and the first cell has been disconnected.

It should be noted that there is no necessary execution sequence between step 502 and step 503. Step 502 may be performed before or after step 503, or may be performed simultaneously with step 503.

In the foregoing embodiment, the first network device may indicate the terminal device to disconnect, when the terminal device is handed over from the first cell managed by the first network device to the second cell managed by the second network device, the connection between the terminal device and the first cell after the receiving moment of the reference signal of the second cell is reached or after the reference signal of the second cell is received. This indicates that the terminal device does not disconnect the connection between the terminal device and the first cell when learning that the terminal device is handed over from the first cell to the second cell, but disconnects the connection between the terminal device and the first cell after the receiving moment of the reference signal of the second cell is reached or after the reference signal of the second cell is received. A moment at which the terminal device learns that the terminal device is handed over from the first cell to the second cell is earlier than the receiving moment of the reference signal of the second cell, and is also earlier than the moment at which the reference signal of the second cell is received. In other words, the time for the terminal device to maintain the connection to the first cell is prolonged, and therefore the handover interruption time can be shortened. For example, for CHO handover or legacy handover, according to the foregoing method, *T*_{Δ} in a handover interruption delay can be reduced or omitted, and therefore handover interruption time is shortened.

Optionally, the method may further include: The terminal device accesses the second cell after the receiving moment of the reference signal of the second cell is reached or after the reference signal of the second cell is received. The terminal device may specifically access the second cell in the following two implementations:
Implementation 1 in which the terminal device accesses the second cell:
The terminal device accesses the second cell at the random access moment. For example, the terminal device sends a preamble to the second cell by using the random access resource of the second cell. A specific access procedure is not limited herein. Optionally, the method further includes: The terminal device receives an association relationship between one or more reference signals of the second cell and one or more random access resources from the first network device, where the one or more random access resources include the random access resource of the second cell. The terminal device determines, based on the association relationship between the one or more reference signals and the one or more random access resources, a random access resource corresponding to a reference signal with highest (or best) signal quality in the one or more reference signals as the random access resource of the second cell.

Implementation 2 in which the terminal device accesses the second cell:
The terminal device accesses the second cell at the sending moment of the PUSCH. For example, the terminal device accesses the second cell by using the PUSCH resource of the second cell. A specific access procedure is not limited herein.

Optionally, after the terminal device accesses the second cell at the random access moment or the sending moment of the PUSCH, the terminal device may further send an RRC reconfiguration complete message to the second cell.

It should be noted that the moment at which the terminal device accesses the second cell may be the same as a moment at which the terminal device disconnects the connection to the first cell. For example, at the random access moment, the terminal device may access the second cell, and may also disconnect the connection to the first cell. For another example, at the sending moment of the PUSCH, the terminal device may access the second cell, and may also disconnect the connection to the first cell. The moment at which the terminal device accesses the second cell may be different from the moment at which the terminal device disconnects the connection to the first cell. For example, the terminal device may access the second cell at the random access moment; and after accessing the second cell, the terminal device disconnects the connection between the terminal device and the first cell after the next receiving moment of the reference signal of the second cell is reached. For another example, the terminal device may access the second cell at the random access moment; and after accessing the second cell, the terminal device disconnects the connection between the terminal device and the first cell after the moment at which the reference signal of the second cell is received next time. In other words, after the receiving moment of the reference signal of the second cell is reached or after the reference signal of the second cell is received, the terminal device first accesses the second cell, but does not disconnect the connection to the first cell. Instead, the terminal device disconnects the connection between the terminal device and the first cell after accessing the second cell. For example, for CHO handover or legacy handover, according to the foregoing method, *T_{IU}* in the handover interruption delay can be reduced or omitted, and therefore the handover interruption time is shortened.

In a possible implementation, "the first information indicates the terminal device to disconnect, when the terminal device is handed over from the first cell managed by the first network device to the second cell managed by the second network device, the connection between the terminal device and the first cell after the receiving moment of the reference signal of the second cell is reached or after the reference signal of the second cell is received" in step 501 may be replaced as follows: The first information indicates the terminal device to disconnect, when the terminal device is handed over from the first cell managed by the first network device to the second cell managed by the second network device, the connection between the terminal device and the first cell before the receiving moment of the reference signal of the second cell is reached or before the reference signal of the second cell is received. In this case, the terminal device may disconnect the connection between the terminal device and the first cell before the receiving moment of the reference signal of the second cell is reached or before the reference signal of the second cell is received.

For example, in the CHO handover scenario, it may also be described as that the first information indicates the terminal device to disconnect, when the terminal device is handed over from the first cell managed by the first network device to the second cell managed by the second network device, the connection between the terminal device and the first cell when the trigger condition information of the second cell is met and before the receiving moment of the reference signal of the second cell is reached or before the reference signal of the second cell is received.

For example, the terminal device may disconnect the connection between the terminal device and the first cell at any moment when the trigger condition information of the second cell is met and before the receiving moment of the reference signal of the second cell is reached. Alternatively, for example, the terminal device may disconnect the connection between the terminal device and the first cell at any moment when the trigger condition information of the second cell is met and before a second moment. There is a first time period between the second moment and a moment at which the receiving moment of the reference signal of the second cell is reached, or there is a first time period between the second moment and a moment before the receiving moment of the reference signal of the second cell is reached. Optionally, the first time period may be indicated by the network device to the terminal device, or may be predefined. This is not limited herein. A length of the first time period may be a value greater than 0, and a unit may be a microsecond, a second, or the like. This is not limited herein.

For example, the terminal device may disconnect the connection between the terminal device and the first cell at any moment when the trigger condition information of the second cell is met and before the terminal device receives the reference signal of the second cell. Alternatively, for example, the terminal device may disconnect the connection between the terminal device and the first cell at any moment when the trigger condition information of the second cell is met and before a third moment. There is a second time period between the third moment and the moment at which the terminal device receives the reference signal of the second cell, or there is a second time period between the third moment and a moment before the terminal device receives the reference signal of the second cell. Optionally, the second time period may be indicated by the network device to the terminal device, or may be predefined. This is not limited herein. A length of the second time period may be a value greater than 0, and a unit may be a microsecond, a second, or the like. This is not limited herein.

For example, for the scenario in which the first cell sends the handover command to the terminal device, it may also be described as that the first information indicates the terminal device to disconnect, when the terminal device is handed over from the first cell managed by the first network device to the second cell managed by the second network device, the connection between the terminal device and the first cell when the terminal device receives the handover command and before the receiving moment of the reference signal of the second cell is reached or before the reference signal of the second cell is received.

For example, the terminal device may disconnect the connection between the terminal device and the first cell at any moment when the terminal device receives the handover command and before the receiving moment of the reference signal of the second cell is reached. Alternatively, for example, the terminal device may disconnect the connection between the terminal device and the first cell at any moment when the terminal device receives the handover command and before a fourth moment. There is a third time period between the fourth moment and a moment at which the receiving moment of the reference signal of the second cell is reached, or there is a third time period between the fourth moment and a moment before the receiving moment of the reference signal of the second cell is reached. Optionally, the third time period may be indicated by the network device to the terminal device, or may be predefined. This is not limited herein. A length of the third time period may be a value greater than 0, and a unit may be a microsecond, a second, or the like. This is not limited herein.

For example, the terminal device may disconnect the connection between the terminal device and the first cell at any moment when the terminal device receives the handover command and before the terminal device receives the reference signal of the second cell. Alternatively, for example, the terminal device may disconnect the connection between the terminal device and the first cell at any moment when the terminal device receives the handover command and before a fifth moment. There is a fourth time period between the fifth moment and the moment at which the terminal device receives the reference signal of the second cell, or there is a fourth time period between the fifth moment and a moment before the terminal device receives the reference signal of the second cell. Optionally, the fourth time period may be indicated by the network device to the terminal device, or may be predefined. This is not limited herein. A length of the fourth time period may be a value greater than 0, and a unit may be a microsecond, a second, or the like. This is not limited herein.

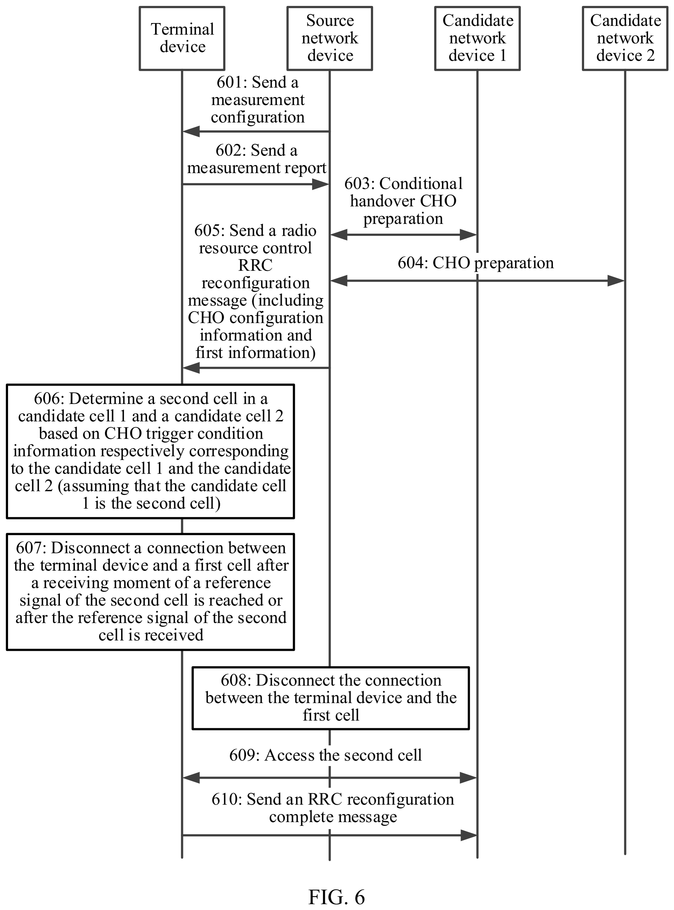

The method embodiment of FIG. 5 includes many possible implementation solutions. The following describes some of the implementation solutions by using examples with reference to FIG. 6. It should be noted that, for related concepts, operations, or logical relationships that are not explained in FIG. 6, refer to corresponding descriptions in the embodiment of FIG. 5. Therefore, details are not described again.

In FIG. 6, an example in which the first network device is a source network device and CHO handover is used is used for description. The source network device may configure two candidate cells for a terminal device, and the two candidate cells are respectively managed by a candidate network device 1 and a candidate network device 2. The communication method includes but is not limited to the following steps.

601: The source network device sends measurement configuration information to the terminal device.

Correspondingly, the terminal device receives the measurement configuration information from the source network device.

Step 601 is similar to step 301 in FIG. 3, and details are not described herein again.

Optionally, step 601 may be an optional step.

602: The terminal device sends a measurement report to the source network device, where the measurement report includes a measurement result of neighboring cell measurement performed by the terminal device based on the measurement configuration information.

Correspondingly, the source network device receives the measurement report from the terminal device.

Step 602 is similar to step 302 in FIG. 3, and details are not described herein again.

Optionally, step 602 may be an optional step.

603: The source network device and the candidate network device 1 perform CHO handover preparation.

Step 603 is similar to step 303 in FIG. 3, and details are not described herein again.

604: The source network device and the candidate network device 2 perform CHO handover preparation.

Step 604 is similar to step 304 in FIG. 3, and details are not described herein again.

605: The source network device may send an RRC reconfiguration message to the terminal device, where the RRC reconfiguration message includes CHO configuration information and first information, the CHO configuration information includes CHO trigger condition information respectively corresponding to a candidate cell 1 and a candidate cell 2, and the first information indicates the terminal device to disconnect, when the terminal device is handed over from a first cell (which may also be referred to as a source cell) managed by the source network device to a candidate cell, a connection between the terminal device and the first cell after a receiving moment of a reference signal of the candidate cell is reached or after the reference signal of the candidate cell is received.

Correspondingly, the terminal device receives the RRC reconfiguration message from the source network device.

The candidate cell indicated by the first information in step 605 may be a general candidate cell, that is, a specific cell is not limited.

For the CHO configuration information, refer to related descriptions in step 305 in FIG. 3. For the first information, refer to descriptions in step 501 in FIG. 5. Details are not described herein again.

606: The terminal device determines a second cell in the candidate cell 1 and the candidate cell 2 (assumes that the candidate cell 1 is the second cell) based on the CHO trigger condition information respectively corresponding to the candidate cell 1 and the candidate cell 2.

For example, the second cell may be a candidate cell, in the candidate cell 1 and the candidate cell 2, that meets the CHO trigger condition information. For example, the second cell is a 1^{st} candidate cell that meets the CHO trigger condition information in the candidate cell 1 and the candidate cell 2.

For another example, the second cell may be a candidate cell, in the candidate cell 1 and the candidate cell 2, that meets the CHO trigger condition information and of which a receiving moment of a reference signal is reached. For example, the second cell is a candidate cell, in the candidate cell 1 and the candidate cell 2, that meets the CHO trigger condition information and of which a receiving moment of a reference signal is first reached.

For another example, the second cell is a candidate cell, in the candidate cell 1 and the candidate cell 2, that meets the CHO trigger condition information and whose reference signal is received. For example, the second cell is a candidate cell, in the candidate cell 1 and the candidate cell 2, that meets the CHO trigger condition information and whose reference signal is first received.

Optionally, the second cell may also be referred to as a target cell.

607: The terminal device disconnects the connection between the terminal device and the first cell after the receiving moment of the reference signal of the second cell is reached or after the reference signal of the second cell is received.

Step 607 is similar to step 502 in FIG. 5, and details are not described herein again.

608: The source network device disconnects the connection between the terminal device and the first cell.

Step 608 is similar to step 503 in FIG. 5, and details are not described herein again.

609: The terminal device accesses the second cell.

Step 609 is similar to the process of "accessing the second cell by the terminal device" in FIG. 5, and details are not described herein again.

Optionally, before step 609, the terminal device may perform synchronization based on a reference signal of the second cell. A specific synchronization process is not limited herein.

It should be noted that there is no necessary execution sequence between step 609 and steps 607 and 608. Step 609 may be performed before or after any one of steps 607 and 608, or may be performed simultaneously with any one of steps 607 and 608.

610: The terminal device may send an RRC reconfiguration complete message to the candidate network device 1 (that is, a target network device).

Correspondingly, the candidate network device 1 receives the RRC reconfiguration complete message from the terminal device.

Step 610 is similar to step 308 in FIG. 3, and details are not described herein again.

In the foregoing embodiment, when CHO handover is used, *T*_{Δ} in a handover interruption delay can be reduced or omitted, and therefore handover interruption time is shortened.

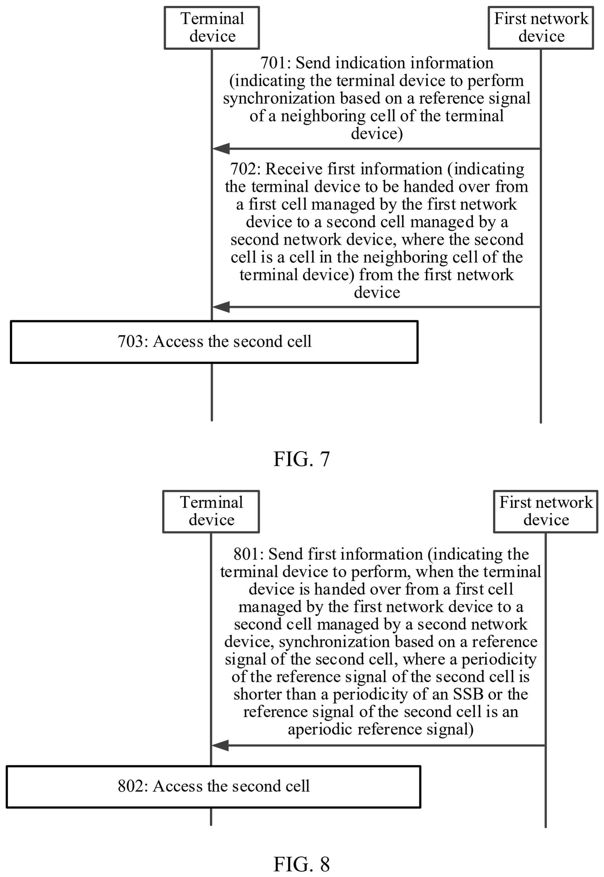

FIG. 7 shows another communication method according to an embodiment of this application. The communication method includes but is not limited to the following steps.

701: A first network device sends indication information to a terminal device, where the indication information indicates the terminal device to perform synchronization based on a reference signal of a neighboring cell of the terminal device.

Correspondingly, the terminal device receives the indication information from the first network device.

It should be noted that there is no necessary execution sequence between step 701 and step 702. Step 701 may be performed before or after step 702, or may be performed simultaneously with step 702. For example, when CHO handover is used, step 701 may be performed before or after step 702, or may be performed simultaneously with step 702. It may be understood that, when the terminal device determines a second cell based on CHO configuration information, specific time needs to be consumed (for example, specific time needs to be consumed from the terminal device receiving the CHO configuration information to the terminal device determining that CHO trigger condition information of the second cell is met). Therefore, the terminal device may perform synchronization with the neighboring cell after step 702. For another example, when legacy handover is used, step 701 may be performed before step 702.

Optionally, that the indication information indicates the terminal device to perform synchronization based on the reference signal of the neighboring cell of the terminal device may be understood as that the indication information indicates the terminal device to perform synchronization with the neighboring cell of the terminal device before disconnecting a connection to a first cell. A specific synchronization process is not limited herein. Synchronization in this application may be precise synchronization.

Optionally, when step 701 is performed before or simultaneously with step 702, that the indication information indicates the terminal device to perform synchronization based on the reference signal of the neighboring cell of the terminal device may be understood as that the indication information indicates the terminal device to perform synchronization based on the reference signal of the neighboring cell of the terminal device when performing neighboring cell measurement on the neighboring cell of the terminal device. In other words, the indication information indicates the terminal device to perform, before disconnecting the connection to the first cell, synchronization with the neighboring cell of the terminal device when performing neighboring cell measurement on the neighboring cell of the terminal device.

Optionally, the indication information may be carried in an RRC message, for example, an RRC reconfiguration message.

Optionally, the method further includes: The first network device receives, from the terminal device, a measurement result of neighboring cell measurement performed on the neighboring cell of the terminal device. The first network device determines, based on the measurement result, one or more neighboring cells that perform synchronization with the terminal device, where the indication information further indicates the one or more neighboring cells. For example, the indication information may further include identification information of the one or more neighboring cells, and the like. This is not limited herein. The identification information of the neighboring cell is used to uniquely identify the cell, and may be, for example, a CGI or a PCI. This indicates that the first network device may clearly notify the terminal device of neighboring cells that need to perform synchronization, in other words, before the terminal device disconnects the connection to the first cell, the terminal device may know neighboring cells with which the terminal device needs to perform synchronization.

Optionally, the reference signal of the neighboring cell may be an SSB, a CSI-RS, a CS-RS, a US-RS, a DMRS, or the like. This is not limited herein.

702: The terminal device receives first information from the first network device, where the first information indicates the terminal device to be handed over from the first cell managed by the first network device to the second cell managed by a second network device, and the second cell is a cell in the neighboring cell of the terminal device.

Correspondingly, the first network device sends the first information to the terminal device.

Optionally, the first information may be carried in an RRC message, for example, an RRC reconfiguration message. For example, when CHO handover is used, the first information is carried in an RRC message (for example, an RRC reconfiguration message). Optionally, when CHO handover is used, the first information may alternatively be carried in CHO configuration information, or the first information may be the CHO configuration information. For another example, when legacy handover is used, the RRC message may also be understood as a handover command corresponding to the second cell, that is, a handover command sent by the first network device to the terminal device for handover to the second cell. Alternatively, the first information is a handover command sent by the first network device to the terminal device for handover to the second cell.

Optionally, in a CHO handover scenario, the indication information in step 701 may be further understood as indicating the terminal device to perform synchronization based on the reference signal of the neighboring cell of the terminal device when determining whether the neighboring cell meets a trigger condition of the neighboring cell.

Optionally, in a scenario in which the first cell sends a handover command to the terminal device, the indication information in step 701 may be further understood as indicating the terminal device to perform synchronization based on the reference signal of the neighboring cell of the terminal device after the terminal device receives the indication information in step 701.

Optionally, when step 701 and step 702 are simultaneously performed, the first information and the indication information may be carried in a same message or different messages. For example, the first information and the indication information may be carried in a same RRC message (for example, an RRC reconfiguration message). For another example, the first information and the indication information may be carried in different RRC messages (for example, RRC reconfiguration messages).

Optionally, the second cell indicated by the first information in step 702 may be a specific cell, that is, a specific cell, for example, a target cell, is limited; or the second cell indicated by the first information in step 702 may be a general candidate cell, that is, a specific cell is not limited. For details, refer to related descriptions of step 501 in FIG. 5. This is not limited herein.

703: The terminal device accesses the second cell.

For example, the terminal device sends a preamble to the second cell by using a random access resource of the second cell. A specific access procedure is not limited herein. In a possible implementation, the method further includes: The terminal device receives first configuration information from the first network device, where the first configuration information is used to determine the random access resource for accessing the second cell. Content specifically included in the first configuration information is not limited herein. For details, refer to a specification of a protocol or a standard of a communication technology. Optionally, the method further includes: The terminal device receives an association relationship between one or more reference signals of the second cell and one or more random access resources from the first network device, where the one or more random access resources include the random access resource of the second cell. The terminal device determines, based on the association relationship between the one or more reference signals and the one or more random access resources, a random access resource corresponding to a reference signal with highest (or best) signal quality in the one or more reference signals as the random access resource of the second cell.

For another example, the terminal device accesses the second cell by using a PUSCH resource of the second cell. A specific access procedure is not limited herein. In a possible implementation, the method further includes: The terminal device receives second configuration information from the first network device, where the second configuration information is used to determine the PUSCH resource for accessing the second cell. Content specifically included in the second configuration information is not limited herein. For details, refer to a specification of a protocol or a standard of a communication technology.

In addition, step 703 may alternatively be similar to the process of "accessing the second cell by the terminal device" in FIG. 5, and details are not described herein again.

In the foregoing embodiment, the first network device may indicate the terminal device to perform synchronization based on the reference signal of the neighboring cell of the terminal device. The neighboring cell of the terminal device includes the second cell. This indicates that the terminal device can directly access the second cell when learning that the terminal device is handed over from the first cell to the second cell. In other words, when CHO handover is used, the terminal device has completed synchronization with the second cell before determining to be handed over to the second cell. Alternatively, when legacy handover is used, a moment at which the terminal device performs synchronization is earlier than a moment at which the terminal device learns that the terminal device is handed over from the first cell to the second cell. Therefore, through advanced synchronization, time consumed for performing synchronization with the second cell after the second cell is determined, after it is learned that the terminal device is handed over from the first cell to the second cell, or after the connection to the first cell is disconnected can be reduced, and therefore handover interruption time can be shortened. For example, for CHO handover or legacy handover, according to the foregoing method, *T*_{Δ} in the handover interruption delay can be reduced or omitted, and therefore the handover interruption time is shortened.

FIG. 8 shows another communication method according to an embodiment of this application. The communication method includes but is not limited to the following steps.

801: A first network device sends first information to a terminal device, where the first information indicates the terminal device to perform, when the terminal device is handed over from a first cell managed by the first network device to a second cell managed by a second network device, synchronization based on a reference signal of the second cell, and a periodicity of the reference signal of the second cell is shorter than a periodicity of an SSB of the second cell, or the reference signal of the second cell is an aperiodic reference signal.

Correspondingly, the terminal device receives the first information from the first network device.

Optionally, in the embodiment of FIG. 8, a reference signal of a cell (for example, the second cell) may be a CSI-RS, a CS-RS, a US-RS, a DMRS, or the like. This is not limited herein.

Optionally, the first information may be carried in an RRC message, for example, an RRC reconfiguration message. For example, when CHO handover is used, the first information is carried in an RRC message (for example, an RRC reconfiguration message). Optionally, when CHO handover is used, the first information may alternatively be carried in CHO configuration information. When legacy handover is used, the RRC message may also be understood as a handover command corresponding to the second cell, that is, a handover command sent by the first network device to the terminal device for handover to the second cell.

Optionally, the second cell indicated by the first information in step 801 may be a specific cell, that is, a specific cell, for example, a target cell, is limited; or the second cell indicated by the first information in step 801 may be a general candidate cell, that is, a specific cell is not limited. For details, refer to related descriptions of step 501 in FIG. 5. This is not limited herein.

802: The terminal device accesses the second cell.

For step 802, refer to related descriptions of step 702 in FIG. 7. Details are not described herein again.

In the foregoing embodiment, the first network device may indicate the terminal device to perform, when the terminal device is handed over from the first cell managed by the first network device to the second cell managed by the second network device, synchronization based on the reference signal of the second cell. Because the periodicity of the reference signal of the second cell is shorter than the periodicity of the SSB, or the reference signal of the second cell is an aperiodic reference signal, when determining to be handed over to the second cell, the terminal device can receive the reference signal of the second cell more quickly, that is, can be synchronized with the second cell more quickly. In this way, time consumed by the terminal device to wait for receiving the reference signal of the second cell can be reduced, and therefore handover interruption time can be shortened.

Optionally, in the embodiment of FIG. 7 or FIG. 8, the method may further include: The terminal device disconnects the connection to the first cell. Specifically, there may be at least one of the following implementations:
Implementation 1 in which the terminal device disconnects the connection to the first cell:
The terminal device disconnects the connection to the first cell when the second cell meets CHO trigger condition information corresponding to the second cell.

Implementation 2 in which the terminal device disconnects the connection to the first cell:
The terminal device disconnects the connection to the first cell when receiving the handover command from the first network device.

An implementation 3 in which the terminal device disconnects the connection to the first cell is similar to related descriptions of step 502 in FIG. 5, and details are not described herein again.

Optionally, in the embodiment of FIG. 8, the method may further include: The terminal device receives third configuration information from the first network device, where the third configuration information is used to determine a resource of the reference signal of the second cell. The terminal device receives the reference signal of the second cell on the resource of the reference signal of the second cell. The terminal device performs synchronization with the second cell based on the reference signal of the second cell. A specific synchronization process is not limited herein. For the third configuration information, refer to related descriptions of step 501 in FIG. 5. Details are not described herein again. The third configuration information is generated by a network device corresponding to the second cell. The third configuration information and the first information may be sent together, or may be sent at different moments.

The foregoing mainly describes the solutions provided in this application from a perspective of interaction between devices. It may be understood that, to implement the foregoing functions, each device includes a corresponding hardware structure and/or software module for performing each function. A person skilled in the art should easily be aware that, in combination with units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device or the network device (for example, the first network device or the second network device) may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

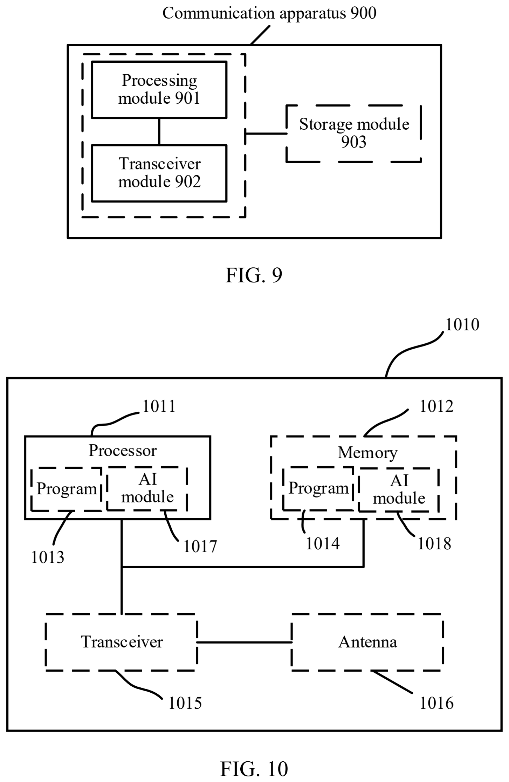

FIG. 9 is a diagram of a structure of a communication apparatus according to an embodiment of this application. The communication apparatus 900 may be applied to the method shown in the embodiment of FIG. 5, FIG. 6, FIG. 7, or FIG. 8. As shown in FIG. 9, the communication apparatus 900 includes a processing module 901 and a transceiver module 902. The processing module 901 may be one or more processors, and the transceiver module 902 may be a transceiver or a communication interface. The communication apparatus may be configured to implement the terminal device or the network device (for example, the first network device or the second network device) in any one of the foregoing method embodiments, or configured to implement a function of a network element in any one of the foregoing method embodiments. The network element or network function may be a network element in a hardware device, a software function running on dedicated hardware, or a virtualized function instantiated on a platform (for example, a cloud platform). Optionally, the communication apparatus 900 may further include a storage module 903, configured to store program code and data of the communication apparatus 900.

In an example, when the communication apparatus is used as a terminal device or a chip used in the terminal device, and performs the steps performed by the terminal device in the foregoing method embodiments, the transceiver module 902 is specifically configured to perform a sending action and/or a receiving action performed by the terminal device in the embodiment of FIG. 5, FIG. 6, FIG. 7, or FIG. 8, for example, support the terminal device in performing another process of the technology described in this specification; and the processing module 901 may be configured to support the communication apparatus 900 in performing a processing action in the foregoing method embodiments, for example, support the terminal device in performing another process of the technology described in this specification.

For example, the transceiver module 902 is configured to receive first information from a first network device, where the first information indicates the terminal device to disconnect, when the terminal device is handed over from a first cell managed by the first network device to a second cell managed by a second network device, a connection between the terminal device and the first cell after a receiving moment of a reference signal of the second cell is reached or after the reference signal of the second cell is received; and the processing module 901 is configured to disconnect the connection between the terminal device and the first cell after the receiving moment of the reference signal of the second cell is reached or after the reference signal of the second cell is received.

In a possible implementation, the transceiver module 902 is further configured to receive CHO configuration information from the first network device, where the CHO configuration information includes CHO trigger condition information corresponding to one or more candidate cells, where the second cell is a candidate cell, in the one or more candidate cells, that meets the CHO trigger condition information; the second cell is a candidate cell, in the one or more candidate cells, that meets the CHO trigger condition information and of which a receiving moment of a reference signal is reached; or the second cell is a candidate cell, in the one or more candidate cells, that meets the CHO trigger condition information and whose reference signal is received.

In a possible implementation, the transceiver module 902 is further configured to receive first configuration information from the first network device, where the first configuration information is used to determine a random access resource for accessing the second cell, and the random access resource of the second cell includes a random access moment; and when disconnecting the connection between the terminal device and the first cell, the processing module 901 is configured to disconnect the connection between the terminal device and the first cell at the random access moment.

In a possible implementation, the transceiver module 902 is further configured to receive second configuration information from the first network device, where the second configuration information is used to determine a PUSCH resource for accessing the second cell, and the PUSCH resource includes a sending moment of a PUSCH; and when disconnecting the connection between the terminal device and the first cell, the processing module 901 is configured to disconnect the connection between the terminal device and the first cell at the sending moment of the PUSCH.

In a possible implementation, before the connection between the terminal device and the first cell is disconnected, the transceiver module 902 is further configured to send second information to the first network device, where the second information indicates that the terminal device is to disconnect the connection between the terminal device and the first cell.

In a possible implementation, after the second cell is accessed, when the connection between the terminal device and the first cell is disconnected, the processing module 901 is configured to: disconnect the connection between the terminal device and the first cell after a next receiving moment of the reference signal of the second cell is reached; or disconnect, by the terminal device, the connection between the terminal device and the first cell after the reference signal of the second cell is received next time.

In a possible implementation, the processing module 901 is further configured to determine the receiving moment of the reference signal of the second cell based on synchronization signal block-based measurement timing configuration information of the second cell; or the transceiver module 902 is further configured to receive third information from the first network device, where the third information indicates the receiving moment of the reference signal of the second cell.

For another example, the transceiver module 902 is configured to: receive indication information from a first network device, where the indication information indicates the terminal device to perform synchronization based on a reference signal of a neighboring cell of the terminal device; and receive first information from the first network device, where the first information indicates the terminal device to be handed over from a first cell managed by the first network device to a second cell managed by a second network device, and the second cell is a cell in the neighboring cell of the terminal device; and the processing module 901 is configured to access the second cell.

In a possible implementation, the method further includes: the transceiver module 902 is further configured to send, to the first network device, a measurement result of neighboring cell measurement performed on the neighboring cell of the terminal device, where the indication information further indicates one or more neighboring cells that perform synchronization with the terminal device, and the one or more neighboring cells are determined based on the measurement result.

For another example, the transceiver module 902 is configured to receive first information from a first network device, where the first information indicates the terminal device to perform, when the terminal device is handed over from a first cell managed by the first network device to a second cell managed by a second network device, synchronization based on a reference signal of the second cell, and a periodicity of the reference signal of the second cell is shorter than a periodicity of an SSB, or the reference signal of the second cell is an aperiodic reference signal; and the processing module 901 is configured to access the second cell.

In a possible implementation, the method further includes: the transceiver module 902 is further configured to: receive third configuration information from the first network device, where the third configuration information is used to determine a resource of the reference signal of the second cell; and receive the reference signal of the second cell on the resource of the reference signal of the second cell; and the processing module 901 is further configured to perform synchronization with the second cell based on the reference signal of the second cell.

In another example, when the communication apparatus is used as a network device (for example, a first network device or a second network device) or a chip used in the network device (for example, the first network device or the second network device), and performs the steps performed by the network device (for example, the first network device or the second network device) in the foregoing method embodiments, the transceiver module 902 is configured to specifically perform a sending action and/or a receiving action performed by the network device (for example, the first network device or the second network device) in the embodiment of FIG. 5, FIG. 6, FIG. 7, or FIG. 8, for example, support the network device (for example, the first network device or the second network device) in performing another process of the technology described in this specification; and the processing module 901 may be configured to support the communication apparatus 900 in performing a processing action in the foregoing method embodiments, for example, support the network device (for example, the first network device or the second network device) in performing another process of the technology described in this specification.

For example, the transceiver module 902 is configured to send first information to a terminal device, where the first information indicates the terminal device to disconnect, when the terminal device is handed over from a first cell managed by a first network device to a second cell managed by a second network device, a connection between the terminal device and the first cell after a receiving moment of a reference signal of the second cell is reached or after the reference signal of the second cell is received; and the processing module 901 is configured to disconnect the connection between the terminal device and the first cell.

In a possible implementation, the transceiver module 902 is further configured to send conditional handover CHO configuration information to the terminal device, where the CHO configuration information includes CHO trigger condition information corresponding to one or more candidate cells, where the second cell is a candidate cell, in the one or more candidate cells, that meets the CHO trigger condition information; the second cell is a candidate cell, in the one or more candidate cells, that meets the CHO trigger condition information and of which a receiving moment of a reference signal is reached; or the second cell is a candidate cell, in the one or more candidate cells, that meets the CHO trigger condition information and whose reference signal is received.

In a possible implementation, the transceiver module 902 is further configured to send first configuration information to the terminal device, where the first configuration information is used to determine a random access resource for accessing the second cell, and the random access resource of the second cell includes a random access moment.

In a possible implementation, the transceiver module 902 is further configured to send second configuration information to the terminal device, where the second configuration information is used to determine a PUSCH resource for accessing the second cell, and the PUSCH resource includes a sending moment of a PUSCH.

In a possible implementation, when the connection between the terminal device and the first cell is disconnected, the processing module 901 is configured to disconnect the connection between the terminal device and the first cell at a first moment, where the first moment is determined based on a moment at which second information from the terminal device is received, and the second information indicates that the terminal device is to disconnect the connection between the terminal device and the first cell; the first moment is determined based on a next receiving moment of the reference signal of the second cell after fourth information from the second network device is received, and the fourth information indicates that the terminal device has been handed over to the second cell; the first moment is determined, after fourth information from the second network device is received, based on a moment at which the terminal device receives the reference signal of the second cell next time; or the first moment is indicated by the second network device.

In a possible implementation, the first information is carried in a handover command, and when the connection between the terminal device and the first cell is disconnected, the processing module 901 is configured to disconnect the connection between the terminal device and the first cell after the receiving moment of the reference signal of the second cell is reached.

For another example, the transceiver module 902 is configured to: send indication information to a terminal device, where the indication information indicates the terminal device to perform synchronization based on a reference signal of a neighboring cell of the terminal device; and send first information to the terminal device, where the first information indicates the terminal device to be handed over from a first cell managed by a first network device to a second cell managed by a second network device, and the second cell is a cell in the neighboring cell of the terminal device.

In a possible implementation, the transceiver module 902 is further configured to receive, from the terminal device, a measurement result of neighboring cell measurement performed on the neighboring cell of the terminal device; and the processing module 901 is further configured to determine, based on the measurement result, one or more neighboring cells that perform synchronization with the terminal device, where the indication information further indicates the one or more neighboring cells.

For another example, the transceiver module 902 is configured to send first information to a terminal device, where the first information indicates the terminal device to perform, when the terminal device is handed over from a first cell managed by a first network device to a second cell managed by a second network device, synchronization based on a reference signal of the second cell, and a periodicity of the reference signal of the second cell is shorter than a periodicity of an SSB, or the reference signal of the second cell is an aperiodic reference signal.

In a possible implementation, when the terminal device or the network device (for example, the first network device or the second network device) is a chip, the transceiver module 902 may be a communication interface, a pin, a circuit, or the like. The communication interface may be configured to input to-be-processed data to a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 901 may be a processor. The processor may execute computer-executable instructions stored in the storage module, so that the chip performs the method in the embodiment of FIG. 5, FIG. 6, FIG. 7, or FIG. 8. Further, the processor may include a controller, an arithmetic logic unit, and a register. For example, the controller is mainly responsible for decoding instructions, and sending a control signal for an operation corresponding to the instructions. The arithmetic logic unit is mainly responsible for performing a fixed-point or floating-point arithmetic operation, a shift operation, a logic operation, and the like, and may also perform an address operation and address translation. The register is mainly responsible for saving register operands, intermediate operation results, and the like that are temporarily stored during instruction execution. During specific implementation, a hardware architecture of the processor may be an ASIC architecture, a microprocessor without interlocked piped stages (microprocessor without interlocked piped stages, MIPS) architecture, an advanced reduced instruction set computing machines (advanced RISC machines, ARM) architecture, a second processor (network processor, NP) architecture, or the like. The processor may be a single-core processor or a multicore processor. The storage module may be a storage module inside the chip, for example, a register or a cache. Alternatively, the storage module may be a storage module outside the chip, for example, a ROM, another type of static storage device that can store static information and instructions, or a RAM.

It should be noted that functions separately corresponding to the processor and the interface may be implemented by using a hardware design, may be implemented by using a software design, or may be implemented by using a combination of software and hardware. This is not limited herein.

FIG. 10 is a diagram of a structure of another communication apparatus according to an embodiment of this application. It may be understood that the communication apparatus 1010 includes means in necessary forms, such as modules, units, elements, circuits, or interfaces, which are appropriately configured together to implement the solution. The communication apparatus 1010 may be the foregoing terminal device (for example, the first terminal device) or the network device, or may be a component (for example, a chip) in these devices, configured to implement the method described in the foregoing method embodiments. The communication apparatus 1010 includes one or more processors 1011. The processor 1011 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, the terminal device (for example, the first terminal device), the network device, or the chip), execute a software program, and process data of the software program.

Optionally, in a design, the processor 1011 may include a program 1013 (which may also be sometimes referred to as code or instructions). The program 1013 may be run on the processor 1011, to enable the communication apparatus 1010 to perform the method described in the foregoing embodiments. In another possible design, the communication apparatus 1010 includes a circuit (not shown in FIG. 10), and the circuit is configured to implement functions of the terminal device (for example, the first terminal device), the network device, or the like in the foregoing embodiments. Optionally, the communication apparatus 1010 may include one or more memories 1012, and a program 1014 (which may also be sometimes referred to as code or instructions) is stored in the memory 1012. The program 1014 may be run on the processor 1011, to enable the communication apparatus 1010 to perform the method described in the foregoing method embodiments.

Optionally, the processor 1011 and/or the memory 1012 may include an AI module 1017 and an AI module 1018. The AI module is configured to implement an AI-related function. The AI module may be implemented by using software, hardware, or a combination of software and hardware. For example, the AI module may include an RIC module. For example, the AI module may be a near-real-time RIC or a non-real-time RIC. Optionally, the processor 1011 and/or the memory 1012 may further store data. The processor and the memory may be separately disposed, or may be integrated together.

Optionally, the communication apparatus 1010 may further include a transceiver 1015 and/or an antenna 1016. The processor 1011 may also be sometimes referred to as a processing unit, and controls the communication apparatus (for example, the terminal device (for example, the first terminal device) or the network device). The transceiver 1015 may also be sometimes referred to as a transceiver unit, a transceiver machine, a transceiver circuit, a transceiver, or the like, and is configured to implement receiving and sending functions of the communication apparatus through the antenna 1016.

An embodiment of this application further provides a communication apparatus. The communication apparatus includes at least one processor and a memory. The memory is configured to store a computer program or instructions. The at least one processor is configured to execute the computer program or the instructions in the memory, so that the method in the embodiment of FIG. 5, FIG. 6, FIG. 7, or FIG. 8 is performed.

An embodiment of this application further provides a computer-readable storage medium. The computer-readable storage medium stores computer instructions. When the computer instructions are executed, a computer is enabled to perform the method in the embodiment of FIG. 5, FIG. 6, FIG. 7, or FIG. 8.

An embodiment of this application further provides a computer program product. The computer program product includes computer program code. When the computer program code is run on a computer, the computer is enabled to perform the method in the embodiment of FIG. 5, FIG. 6, FIG. 7, or FIG. 8.

An embodiment of this application further provides a chip. The chip includes at least one processor and an interface. The processor is configured to read and execute instructions stored in a memory. When the instructions are run, the chip is enabled to perform the method in the embodiment of FIG. 5, FIG. 6, FIG. 7, or FIG. 8.

The units described as separate parts may or may not be physically separate, and parts displayed as units may or may not be physical units, that is, may be located at one position, or may be distributed on a plurality of network units. Some or all of the units may be selected based on an actual requirement, to achieve the objectives of the solutions in embodiments of this application. In addition, network element units in embodiments of this application may be integrated into one processing unit, each of the units may exist alone physically, or two or more units may be integrated into one unit. The integrated unit may be implemented in a form of hardware, or may be implemented in a form of a software network element unit.

When the integrated unit is implemented in the form of a software network element unit and sold or used as an independent product, the integrated unit may be stored in a computer-readable storage medium. Based on such an understanding, an essentially contributing part in the technical solutions of this application or all or a part of the technical solutions may be embodied in a form of a software product. The computer software product is stored in a storage medium and includes several instructions for instructing a computer device (which may be a personal computer, a terminal device, a cloud server, a network device, or the like) to perform all or some of the steps of the method in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc. The foregoing descriptions are merely specific implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information from a first network device, wherein the first information indicates a terminal device to disconnect, when the terminal device is handed over from a first cell managed by the first network device to a second cell managed by a second network device, a connection between the terminal device and the first cell after a receiving moment of a reference signal of the second cell is reached; and
disconnecting the connection between the terminal device and the first cell after the receiving moment of the reference signal of the second cell is reached.

2. The method according to claim 1, wherein the method further comprises:
receiving conditional handover CHO configuration information from the first network device, wherein the CHO configuration information comprises CHO trigger condition information corresponding to one or more candidate cells, wherein
the second cell is a candidate cell, in the one or more candidate cells, that meets the CHO trigger condition information and of which a receiving moment of a reference signal is reached.

3. The method according to claim 1 or 2, wherein the method further comprises:
receiving first configuration information from the first network device, wherein the first configuration information is used to determine a random access resource for accessing the second cell, and the random access resource of the second cell comprises a random access moment; and
disconnecting the connection between the terminal device and the first cell comprises:
disconnecting the connection between the terminal device and the first cell at the random access moment.

4. The method according to claim 1 or 2, wherein the method further comprises:
receiving second configuration information from the first network device, wherein the second configuration information is used to determine a physical uplink shared channel resource for accessing the second cell, and the physical uplink shared channel resource comprises a sending moment of the physical uplink shared channel; and
disconnecting the connection between the terminal device and the first cell comprises:
disconnecting the connection between the terminal device and the first cell at the sending moment of the physical uplink shared channel.

5. The method according to claim 1 or 2, wherein before disconnecting the connection between the terminal device and the first cell, the method further comprises:
sending second information to the first network device, wherein the second information indicates that the terminal device is to disconnect the connection between the terminal device and the first cell.

6. The method according to claim 1 or 2, wherein after the second cell is accessed, disconnecting the connection between the terminal device and the first cell comprises:
disconnecting the connection between the terminal device and the first cell after a next receiving moment of the reference signal of the second cell is reached.

7. The method according to any one of claims 1 to 6, wherein the method further comprises:
determining the receiving moment of the reference signal of the second cell based on synchronization signal block-based measurement timing configuration information of the second cell; or
receiving third information from the first network device, wherein the third information indicates the receiving moment of the reference signal of the second cell.

8. The method according to any one of claims 1 to 7, wherein the reference signal of the second cell is a synchronization signal block.

9. The method according to any one of claims 1 to 7, wherein the reference signal of the second cell is a reference signal obtained by performing scrambling based on an identifier allocated by the second network device to the terminal device, and the reference signal of the second cell is used by the terminal device to perform downlink synchronization with the second cell.

10. A communication method, comprising:
sending first information to a terminal device, wherein the first information indicates the terminal device to disconnect, when the terminal device is handed over from a first cell managed by the first network device to a second cell managed by a second network device, a connection between the terminal device and the first cell after a receiving moment of a reference signal of the second cell is reached; and
disconnecting the connection between the terminal device and the first cell.

11. The method according to claim 10, wherein the method further comprises:
sending conditional handover CHO configuration information to the terminal device, wherein the CHO configuration information comprises CHO trigger condition information corresponding to one or more candidate cells, wherein
the second cell is a candidate cell, in the one or more candidate cells, that meets the CHO trigger condition information and of which a receiving moment of a reference signal is reached.

12. The method according to claim 10 or 11, wherein the method further comprises:
sending first configuration information to the terminal device, wherein the first configuration information is used to determine a random access resource for accessing the second cell, and the random access resource of the second cell comprises a random access moment.

13. The method according to claim 10 or 11, wherein the method further comprises:
sending second configuration information to the terminal device, wherein the second configuration information is used to determine a physical uplink shared channel resource for accessing the second cell, and the physical uplink shared channel resource comprises a sending moment of the physical uplink shared channel.

14. The method according to any one of claims 10 to 13, wherein disconnecting the connection between the terminal device and the first cell comprises:
disconnecting the connection between the terminal device and the first cell at a first moment, wherein
the first moment is determined based on a moment at which second information from the terminal device is received, and the second information indicates that the terminal device is to disconnect the connection between the terminal device and the first cell;
the first moment is determined based on a next receiving moment of the reference signal of the second cell after fourth information from the second network device is received, and the fourth information indicates that the terminal device has been handed over to the second cell; or
the first moment is indicated by the second network device.

15. The method according to any one of claims 10 to 14, wherein the reference signal of the second cell is a synchronization signal block.

16. A communication method, comprising:
receiving indication information from a first network device, wherein the indication information indicates a terminal device to perform synchronization based on a reference signal of a neighboring cell of the terminal device;
receiving first information from the first network device, wherein the first information indicates the terminal device to be handed over from a first cell managed by the first network device to a second cell managed by a second network device, and the second cell is a cell in the neighboring cell of the terminal device; and
accessing the second cell.

17. The method according to claim 16, wherein the method further comprises:
sending, to the first network device, a measurement result of neighboring cell measurement performed on the neighboring cell of the terminal device, wherein the indication information further indicates one or more neighboring cells that perform synchronization with the terminal device, and the one or more neighboring cells are determined based on the measurement result.

18. A communication method, comprising:
sending indication information to a terminal device, wherein the indication information indicates the terminal device to perform synchronization based on a reference signal of a neighboring cell of the terminal device; and
sending first information to the terminal device, wherein the first information indicates the terminal device to be handed over from a first cell managed by the first network device to a second cell managed by a second network device, and the second cell is a cell in the neighboring cell of the terminal device.

19. The method according to claim 18, wherein the method further comprises:
receiving, from the terminal device, a measurement result of neighboring cell measurement performed on the neighboring cell of the terminal device; and
determining, based on the measurement result, one or more neighboring cells that perform synchronization with the terminal device, wherein
the indication information further indicates the one or more neighboring cells.

20. A communication apparatus, comprising a unit or module configured to implement the method according to any one of claims 1 to 19.

21. A communication apparatus, wherein the communication apparatus comprises at least one processor and a memory; the memory is configured to store a computer program or instructions; and the at least one processor is configured to execute the computer program or the instructions in the memory, so that the method according to any one of claims 1 to 19 is performed.

22. A communication system, wherein the communication system comprises a terminal device and a first network device;
the terminal device is configured to perform the method according to any one of claims 1 to 9; and
the first network device is configured to perform the method according to any one of claims 10 to 15.

23. A communication system, wherein the communication system comprises a terminal device and a first network device;
the terminal device is configured to perform the method according to claim 16 or 17; and
the first network device is configured to perform the method according to claim 18 or 19.

24. A computer-readable storage medium, wherein the computer-readable storage medium stores computer instructions; and when the computer instructions are executed, the computer is enabled to perform the method according to any one of claims 1 to 19.

25. A computer program product, wherein the computer program product comprises computer program code; and when the computer program code is run on a computer, the computer is enabled to perform the method according to any one of claims 1 to 19.

26. A chip, wherein the chip comprises at least one processor and an interface; the processor is configured to read and execute instructions stored in a memory; and when the instructions are run, the chip is enabled to perform the method according to any one of claims 1 to 19.
